# FASCICULE DE BREVET EUROPEEN

(11) **EP 3 670 992 B1**
(45) Date de publication et mention de la délivrance du brevet: **14.09.2022**
(21) Numéro de dépôt: 19218661.7
(22) Date de dépôt: 20.12.2019
(51) Int. Cl.: F16L 37/084

(54) **ELÉMENT FEMELLE DE RACCORD ET RACCORD FLUIDIQUE COMPRENANT UN ÉLÉMENT MÂLE DE RACCORD AINSI QUE LEDIT ÉLÉMENT FEMELLE DE RACCORD**
ANSCHLUSSBUCHSE UND FLUIDANSCHLUSS, DER EIN STECKANSCHLUSSELEMENT SOWIE DIESE ANSCHLUSSBUCHSE UMFASST
FEMALE CONNECTION ELEMENT AND FLUID CONNECTOR INCLUDING A MALE CONNECTION ELEMENT AND SAID FEMALE CONNECTION ELEMENT

(30) Priorité: 21.12.2018 FR 1873884
(43) Date de publication de la demande: 24.06.2020
(73) Titulaire: Staubli Faverges, 74210 Faverges-Seythenex (FR)
(72) Inventeur: TIBERGHIEN, Alain-Christophe, 74320 SEVRIER (FR); DURIEUX, Christophe, 73200 GILLY SUR ISERE (FR)
(74) Mandataire: Lavoix

(56) Documents cités:
- EP-A1- 0 375 581
- EP-A1- 1 422 461

## Description

La présente invention concerne un élément femelle de raccord fluidique, ainsi qu'un raccord fluidique comprenant un élément mâle de raccord ainsi que ledit élément femelle de raccord.

L'invention concerne le domaine des raccords fluidiques, en particulier pour le remplissage de réservoirs avec du fluide frigorifique, par exemple jusqu'à 20 bars.

EP 1 916 464 A1 décrit un élément femelle de raccord, apte à recevoir un élément mâle tubulaire lisse en emmanchement. L'élément femelle comprend un joint d'étanchéité logé à l'intérieur d'un corps de l'élément femelle et apte à coopérer de manière étanche avec une surface périphérique de l'élément mâle. L'élément femelle comprend en outre un organe d'interface, logé à l'intérieur du corps de l'élément femelle. L'organe d'interface est déplacé en translation parallèlement à l'axe d'emmanchement sous l'action de l'élément mâle, en cours d'emmanchement dans l'élément femelle, depuis une première position, dans laquelle l'organe d'interface est intercalé radialement entre le joint d'étanchéité et la surface périphérique de l'élément mâle, vers une deuxième position, dans laquelle l'organe d'interface est décalé axialement par rapport au joint d'étanchéité, le joint d'étanchéité reposant de manière étanche sur la surface périphérique de l'élément mâle.

L'organe d'interface évite ainsi la dégradation du joint d'étanchéité lors de l'emmanchement de l'élément mâle, notamment si ledit élément mâle présente des irrégularités en saillie en sa surface périphérique.

Pour cet élément femelle connu, le verrouillage de l'élément mâle est assuré par des billes logées dans une bague de verrouillage mobile, les billes coinçant la surface périphérique de l'élément mâle. Les billes sont maintenues ainsi par une surface prévue à une embouchure du corps. Pour cet élément femelle connu, le verrouillage de l'élément mâle est automatique, puisque, à l'accouplement, l'extrémité de l'élément mâle repousse d'abord les billes et la bague de verrouillage vers l'arrière par rapport au corps de l'élément femelle, jusqu'à une certaine position où un ressort repousse la bague de verrouillage en sens inverse, de sorte à verrouiller l'élément mâle dans l'élément femelle.

Cependant, la présence cumulée de l'organe d'interface et de la bague de verrouillage conduit à ce que l'élément femelle ait un encombrement longitudinal important. Cet encombrement impose qu'une longueur importante de l'élément mâle tubulaire soit introduite dans l'élément femelle pour réaliser l'accouplement.

FR 1 487 324 A décrit un élément femelle de raccord, apte à verrouiller un élément mâle de raccord comportant une collerette à profil tronconique. Pour cela, cet élément femelle comprend un verrou, comprenant une dent conçue pour venir en prise avec la collerette en position de retenue du verrou. Le verrouillage de l'élément mâle dans l'élément femelle est automatique par engagement du profil tronconique avec cette même dent ce qui déplace le verrou de sa position de retenue à sa position de libération dans laquelle le verrou libère le passage pour l'élément mâle de raccord dans l'élément femelle. En variante, le verrou est maintenu en position de retenue de l'élément mâle par un goujon transversal, que l'utilisateur doit repousser pour permettre le verrouillage et le déverrouillage de l'élément mâle.

Toutefois, cet élément femelle de raccord connu nécessite une surface tronconique sur la dent de verrou pour l'accouplement automatique, qui impose qu'une longueur importante de l'élément mâle soit introduite dans l'élément femelle pour réaliser l'accouplement.

EP 0 375 581 A1 décrit un coupleur comprenant un corps, un clapet, coulissant axialement dans ce corps et portant un joint annulaire, ainsi qu'une bague de verrouillage coulissant radialement dans un puits du corps, actionnable au moyen d'un bouton poussoir et rappelée par un ressort. Un embout peut être reçu dans le coupleur en y étant verrouillé à l'aide de billes logées dans des ouvertures circulaires du clapet. Quand le coupleur est au repos, le clapet, sollicité par un ressort, est en butée contre un bord interne de l'ouverture du corps. Lorsque l'embout est introduit dans le coupleur, un redan de l'embout escamote les billes qui rentrent dans une gorge du corps. En enfonçant davantage l'embout, l'extrémité de ce dernier arrive en butée sur un épaulement du clapet, et les billes sont maintenant au-delà du redan, susceptibles par conséquent de quitter la gorge. Si l'on continue à pousser sur l'embout, celui-ci entraîne le clapet en amont dans le corps, contre l'action du ressort du clapet. Lors du passage vers une position d'ouverture, un redan du clapet escamote une dent de la bague, et la dent, sollicitée par le ressort de la bague, ressort derrière le redan du clapet pour le verrouiller.

Un objet de l'invention est donc de porter remède aux inconvénients de l'art antérieur, en proposant un nouvel élément femelle de raccord fluidique qui s'oppose automatiquement au retrait d'un élément mâle emmanché en son sein, même si l'élément mâle est de longueur réduite, en particulier même si la surface radiale externe de la partie de l'élément mâle emmanchée dans l'élément femelle présente un diamètre longitudinalement constant.

L'invention a pour objet un élément femelle de raccord fluidique, l'élément femelle de raccord étant conçu pour adopter une configuration accouplée et une configuration désaccouplée et comprenant :
- un corps femelle, ménageant un canal interne apte à recevoir un élément mâle de raccord en emmanchement selon un axe longitudinal de l'élément femelle de raccord ;
- un joint d'étanchéité principal, apte à coopérer radialement avec l'élément mâle de raccord en configuration accouplée ;
- un verrou, percé d'une ouverture conçue pour être traversée par l'élément mâle de raccord, le verrou étant monté à coulissement dans un logement de verrou débouchant du corps femelle, radialement à l'axe longitudinal, entre une position de retenue, dans laquelle le verrou coopère avec une surface radiale externe de l'élément mâle et s'oppose au retrait de l'élément mâle de raccord hors du corps femelle, et une position de libération, dans laquelle le verrou autorise le mouvement de l'élément mâle de raccord dans le corps femelle ; en configuration accouplée, le verrou est en position de retenue ; et
- des moyens élastiques rappelant le verrou vers sa position de retenue, et
- un poussoir, mobile dans le canal interne du corps femelle selon l'axe longitudinal entre une position avant et une position arrière.

Selon l'invention, l'élément femelle de raccord comprend :
- une bague mémoire, solidaire avec le corps femelle radialement à l'axe longitudinal et mobile selon l'axe longitudinal dans le corps femelle, entre:
   ∘ une position avancée, dans laquelle la bague mémoire coopère avec le verrou, radialement à l'axe longitudinal, et maintient ainsi le verrou en position de libération, et
   ∘ une position reculée, dans laquelle la bague mémoire autorise le déplacement du verrou vers sa position de retenue, le poussoir étant apte à entraîner la bague mémoire jusqu'à la position reculée lorsque le poussoir se déplace de la position avant à la position arrière ; et
- un premier ressort qui rappelle la bague mémoire vers sa position avancée.

En configuration désaccouplée, la bague mémoire est en position avancée.

Grâce à l'invention, l'élément femelle assure automatiquement un verrouillage s'opposant au retrait de l'élément mâle, lorsque cet élément mâle est emmanché dans le canal interne. Pour cela, en configuration désaccouplée de l'élément femelle, le mouvement d'emmanchement de l'élément mâle pousse le poussoir et conduit ainsi le poussoir à entraîner la bague mémoire jusqu'à sa position reculée. La bague mémoire autorise alors le verrou à être automatiquement amené en position de retenue par les moyens élastiques. Le poussoir et la bague mémoire étant simplement actionnés en étant poussés par l'élément mâle, la mise en position de retenue du verrou est effectuée même si l'élément mâle est de diamètre longitudinalement constant, c'est-à-dire qu'il ne présente pas de gorge, de collerette ou d'épaulement. Pour que l'élément mâle puisse pousser le poussoir, on prévoit par exemple que, lors de l'emmanchement de l'élément mâle, une extrémité avant de l'élément mâle actionne le poussoir.

L'invention prévoit que le verrou est radialement mobile par rapport à l'axe longitudinal afin de réduire l'encombrement longitudinal de l'élément femelle. Le verrou étant longitudinalement court, il peut être avantageusement disposé entre une extrémité avant de l'élément femelle et le poussoir. Ainsi, lors de l'emmanchement dans l'élément femelle, un élément mâle de longueur réduite peut tout de même atteindre et actionner le poussoir, afin que la bague mémoire soit entraînée pour faire automatiquement passer le verrou en position de retenue.

Par l'expression « le verrou coopère avec une surface radiale externe de l'élément mâle », on entend que le verrou est directement en contact avec la surface radiale externe de l'élément mâle. Le verrou s'oppose donc lui-même au retrait de l'élément mâle, sans pièce intermédiaire.

Des caractéristiques avantageuses de l'invention sont définies dans ce qui suit :
- Le verrou et la bague mémoire comprennent des surfaces de butée respectives, qui sont orthoradiales par rapport à l'axe longitudinal, alors que la surface de butée de la bague mémoire et la surface de butée du verrou : en position avancée de la bague mémoire, sont en contact pour maintenir le verrou en position de libération et en position reculée de la bague mémoire, sont décalées l'une par rapport à l'autre selon l'axe longitudinal pour autoriser le déplacement du verrou vers sa position de retenue.
- La surface de butée du verrou est délimitée par l'ouverture du verrou.
- En position de retenue du verrou, la surface de butée de la bague mémoire est en vis-à-vis d'une surface de retenue du verrou, radialement par rapport à l'axe longitudinal.
- Le verrou comprend deux surfaces de verrouillage, qui délimitent des portions de l'ouverture et qui sont destinées à coopérer avec l'élément mâle de raccord en position de retenue du verrou ; les deux surfaces de verrouillage sont symétriques par rapport à un plan radial par rapport à l'axe longitudinal ; les deux surfaces de verrouillage sont inclinées l'une par rapport à l'autre et convergent à l'opposé du débouché radial du logement de verrou dans un plan de coupe orthogonal à l'axe longitudinal et traversant les deux surfaces de verrouillage.
- Les deux surfaces de verrouillage sont inclinées l'une par rapport à l'autre et convergent vers l'arrière de l'élément femelle de raccord dans un plan de coupe orthoradial à l'axe longitudinal et traversant les deux surfaces de verrouillage.
- Le poussoir dispose d'une possibilité de mouvement par rapport à la bague mémoire, selon l'axe longitudinal.
- La bague mémoire et le poussoir sont disposés radialement de part et d'autre du corps femelle ; le corps femelle comprend un logement allongé, qui est radialement traversant, deux joints d'étanchéité disposés de part et d'autre du logement allongé, le long de l'axe longitudinal, sont radialement interposés entre le poussoir et le corps femelle, l'élément femelle de raccord comprend au moins un élément de transmission qui est disposé dans le logement allongé et qui est apte à coopérer longitudinalement avec la bague mémoire et avec le poussoir, de sorte que le poussoir est apte à entraîner la bague mémoire vers la position reculée, par l'intermédiaire de l'élément de transmission.
- Chaque élément de transmission comprend une bille d'actionnement.
- Le poussoir délimite un lamage avant de réception d'une extrémité avant de l'élément mâle de raccord ; en position avant et en configuration désaccouplée de l'élément femelle de raccord, le poussoir est interposé radialement entre le lamage avant et le joint d'étanchéité principal ; et le poussoir est mobile selon l'axe longitudinal par rapport au corps femelle, à l'encontre d'un deuxième ressort de l'élément femelle de raccord, jusqu'à une position dans laquelle le poussoir est longitudinalement décalé par rapport au joint d'étanchéité principal.
- L'élément femelle de raccord comprend un logement principal, logeant le joint d'étanchéité principal ; le corps femelle comprend un corps intermédiaire autour duquel est montée la bague mémoire ; la bague mémoire forme une paroi axiale avant du logement principal.
- Une extrémité avant du poussoir et une paroi axiale arrière du logement principal définissent, selon l'axe longitudinal, en configuration désaccouplée, une première distance longitudinale ; et le poussoir comprend une surface de contact par l'intermédiaire de laquelle le poussoir vient, lors de son mouvement entre la position avant et la position arrière, en contact longitudinal avec l'élément de transmission afin d'entraîner la bague mémoire vers la position reculée, l'élément de transmission en butée arrière contre la bague mémoire et la surface de contact définissant entre eux, en configuration désaccouplée, une deuxième distance longitudinale, définie selon l'axe longitudinal, la deuxième distance longitudinale étant supérieure ou égale à la première distance longitudinale.
- En configuration désaccouplée, le joint d'étanchéité principal est longitudinalement décalé par rapport au corps intermédiaire ; et en configuration accouplée, une surface radiale interne de recouvrement du corps intermédiaire est en recouvrement radial du joint d'étanchéité principal.
- L'élément femelle de raccord comprend en outre une bague d'ajustement logée dans le corps intermédiaire et formant une paroi axiale arrière du logement principal du joint d'étanchéité principal dans l'élément femelle, la bague d'ajustement étant mobile par rapport au corps intermédiaire selon l'axe longitudinal et étant repoussée par un troisième ressort en direction du joint d'étanchéité principal.
- Une troisième distance longitudinale, mesurée selon l'axe longitudinal est définie en configuration désaccouplée entre la paroi axiale avant et une extrémité avant de la surface radiale interne de recouvrement; en configuration désaccouplée et en position avancée de la bague mémoire, les surfaces de butée coopèrent sur une quatrième distance longitudinale, définie selon l'axe longitudinal ; et la troisième distance longitudinale est inférieure ou égale à la quatrième distance longitudinale.
- La bague mémoire comprend une languette d'indexage, qui est engagée dans une rainure longitudinale d'indexage du verrou, pour lier la bague mémoire et le verrou en rotation autour de l'axe longitudinal.

L'invention concerne également un raccord fluidique, comprenant un élément mâle de raccord, ainsi que l'élément femelle de raccord tel que défini ci-avant, l'élément mâle de raccord étant apte à venir longitudinalement en butée contre le poussoir et à repousser le poussoir de sa position avant à sa position arrière, le verrou coopérant, en position de retenue, avec la surface radiale externe de l'élément mâle de raccord pour s'opposer au retrait de l'élément mâle de raccord hors du corps femelle, la surface radiale externe de l'élément mâle de raccord étant de diamètre longitudinalement constant sur toute sa partie longitudinale emmanchée dans l'élément femelle de raccord en configuration accouplée.

D'autres caractéristiques de l'invention ressortent plus en détail de la description qui suit, présentant des modes de réalisation préférentiels de l'invention sans but limitatif, cette description faisant référence aux dessins annexés listés ci-dessous :
[Fig 1] [Fig 2] [Fig 3] les figures 1, 2 et 3 sont des coupes longitudinales, selon un même trait de coupe, d'un raccord fluidique selon un premier mode de réalisation conforme à l'invention, le raccord fluidique étant montré dans trois configurations différentes,
[Fig 4] [Fig 5] [Fig 6] les figures 4, 5 et 6 sont des coupes transversales de la figure 1 selon les traits de coupe IV-IV, V-V et VI-VI, la figure 4 montrant un trait de coupe I-I selon lequel la coupe des figures 1, 2 et 3 a été effectué,
[Fig 7] [Fig 8] les figures 7 et 8 sont des coupes transversales de la figure 3 selon des traits de coupe VII-VII et VIII-VIII,
[Fig 9] la figure 9 est une coupe longitudinale de la figure 3 selon le trait de coupe IX-IX,
[Fig 10] la figure 10 est une vue en perspective d'un élément femelle appartenant au raccord fluidique des figures précédentes,
[Fig 11] la figure 11 est une vue en perspective d'une partie d'une mémoire appartenant à l'élément femelle de la figure 10,
[Fig 12] la figure 12 est une vue en perspective d'un verrou appartenant à l'élément femelle de la figure 10,
[Fig 13] [Fig 14] les figures 13 et 14 sont des coupes longitudinales, selon un même trait de coupe, d'un raccord fluidique selon un deuxième mode de réalisation conforme à l'invention, le raccord fluidique étant montré dans deux configurations différentes,
[Fig 15] la figure 15 est une coupe transversales de la figure 13 selon le trait de coupe XV-XV, la figure 15 montrant un trait de coupe XIII-XIII selon lequel la coupe de la figure 13 a été effectuée,
[Fig 16] la figure 16 est une coupe transversales de la figure 14 selon le trait de coupe XVI-XVI, la figure 16 montrant un trait de coupe XIV-XIV selon lequel la coupe de la figure 13 a été effectuée,
[Fig 17] la figure 17 est une vue en perspective d'un verrou appartenant à un élément femelle appartenant au raccord fluidique des figures 13 à 16.

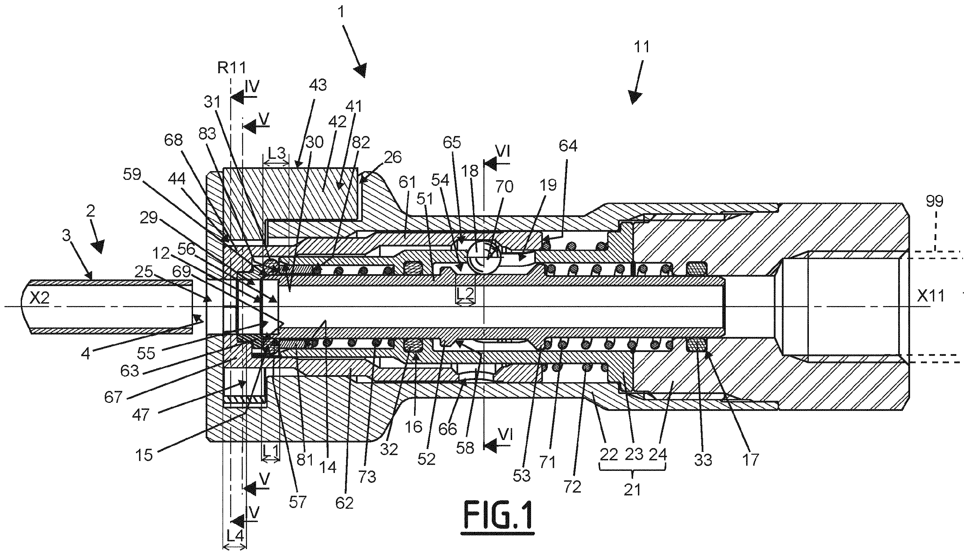

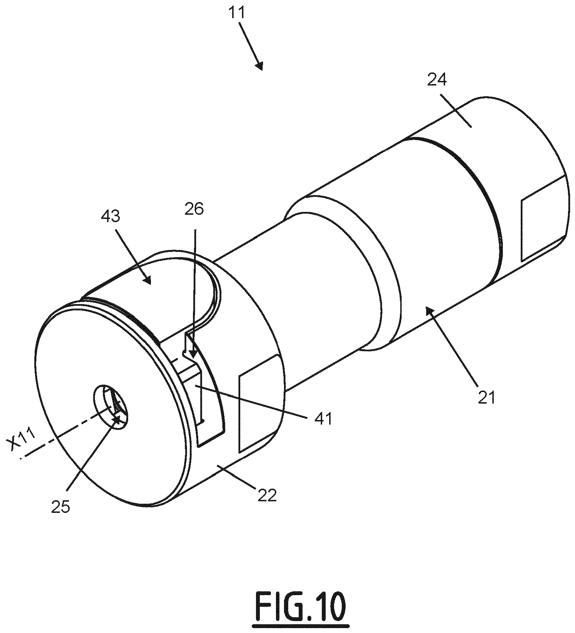

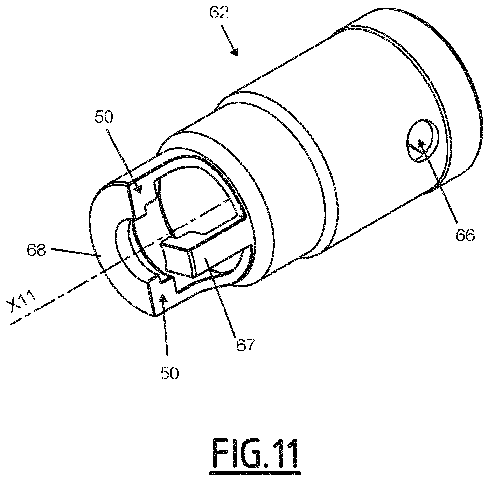

Dans le premier mode de réalisation illustré aux figures 1 à 12, un raccord fluidique 1 comprend un élément femelle de raccord 11 fluidique et un élément mâle de raccord 2 fluidique. Par exemple l'élément mâle de raccord 2 est un tube en laiton ou en cuivre.

Sauf mention explicite du contraire, dans le présent document, les expressions telles que « radial », « axial », « longitudinal », « transversal », lorsqu'elles concernent l'élément femelle de raccord 11, se rapportent à un axe longitudinal X11 défini par l'élément femelle de raccord 11. De même, le terme « avant », lorsqu'il concerne l'élément femelle de raccord 11, désigne une direction longitudinale vers la gauche de la figure 1, alors que le terme « arrière » désigne une direction opposée. Le terme « interne » lorsqu'il concerne l'élément femelle de raccord 11, signifie «tourné vers l'axe longitudinal X11 », alors que le terme « externe » signifie « tourné dans la direction opposée à l'axe longitudinal X11 ».

Sauf mention explicite du contraire, les expressions telles que « radial », « axial », « longitudinal », « transversal », lorsqu'elles concernent l'élément mâle de raccord 2, se rapportent à un axe longitudinal X2 défini par l'élément mâle de raccord 2. De même, le terme « avant », lorsqu'il concerne l'élément mâle de raccord 2, désigne une direction longitudinale vers la droite de la figure 1, alors que le terme « arrière » désigne une direction opposée. Le terme « interne » lorsqu'il concerne l'élément mâle de raccord 2, signifie « tourné vers l'axe longitudinal X2 », alors que le terme « externe » signifie « tourné dans la direction opposée à l'axe longitudinal X2 ».

L'élément mâle de raccord 2 comprend une extrémité avant 4. L'élément mâle de raccord 2 est préférentiellement tubulaire, c'est-à-dire qu'il comprend une surface radiale externe 3 de diamètre longitudinalement constant le long de l'axe X2, au moins pour une partie longitudinale de l'élément mâle de raccord 2 s'étendant à partir de son extrémité avant 4 et destinée à être emmanchée dans l'élément de raccord femelle 11. L'élément mâle de raccord comprend également un canal interne. La forme tubulaire de l'élément mâle de raccord 2 est avantageusement coaxiale avec l'axe X2. Par exemple, l'élément mâle de raccord 2 est un tube de cuivre ou de laiton à section transversale circulaire. De préférence, le canal interne de l'élément mâle de raccord 2 est fluidiquement raccordé, à son extrémité arrière, à un réservoir de fluide sous pression, par exemple à 20 bars, par exemple un fluide frigorifique. L'élément mâle de raccord 2 forme une entrée du réservoir et sert au remplissage du réservoir avec ce fluide sous pression, provenant de l'élément femelle de raccord 11. Une fois le remplissage effectué, l'élément mâle de raccord 2 est écrasé et soudé et l'extrémité avant 4 est coupée.

L'élément femelle de raccord 11 comprend un corps femelle 21, comprenant de préférence un corps avant 22, un corps arrière 24 et un corps intermédiaire 23, qui sont tubulaires et coaxiaux avec l'axe longitudinal X11. Le corps avant 22 et le corps arrière 24 sont fixement solidaires l'un de l'autre.

Le corps arrière 24 est conçu pour être relié à une canalisation 99, montrée en traits discontinus sur la figure 1, également coaxiale avec l'axe longitudinal X11. Le corps femelle 21 délimite un canal interne 29 en communication avec la canalisation 99. Le corps avant 22, le corps intermédiaire 23 et le corps arrière 24 délimitent chacun, le long de l'axe longitudinal X11, une partie successive du canal interne 29.

Le corps avant 22 comprend une embouchure 25, qui s'étend axialement à une extrémité avant du corps avant 22.Le canal interne 29 est conformé pour recevoir l'élément mâle de raccord 2 en emmanchement en son sein. En d'autres termes, l'élément mâle de raccord 2 peut être introduit dans le canal interne 29, par l'intermédiaire de l'extrémité avant 4, introduite dans le corps femelle 21 via l'embouchure 25. Une fois l'emmanchement effectué, l'élément femelle de raccord 11 est conformé pour que les axes longitudinaux X2 et X11 du raccord fluidique 1 soient coaxiaux.

Le corps avant 22 comprend un logement de verrou 26, qui s'étend radialement à l'axe longitudinal X11 et qui débouche sur une surface radiale externe du corps avant 22, dans une direction radiale par rapport à l'axe longitudinal X11 et qui est borgne dans la direction radiale opposée.

Le corps intermédiaire 23 comprend, à son extrémité avant, une surface interne inclinée 30 en biseau, qui diverge vers l'avant. Par exemple la surface interne inclinée 30 est de forme conique centrée sur l'axe longitudinal X11. Vers l'arrière partir de la surface interne inclinée 30, le corps intermédiaire 23 forme une surface radiale interne de recouvrement 14, de diamètre constant le long de l'axe longitudinal X11.

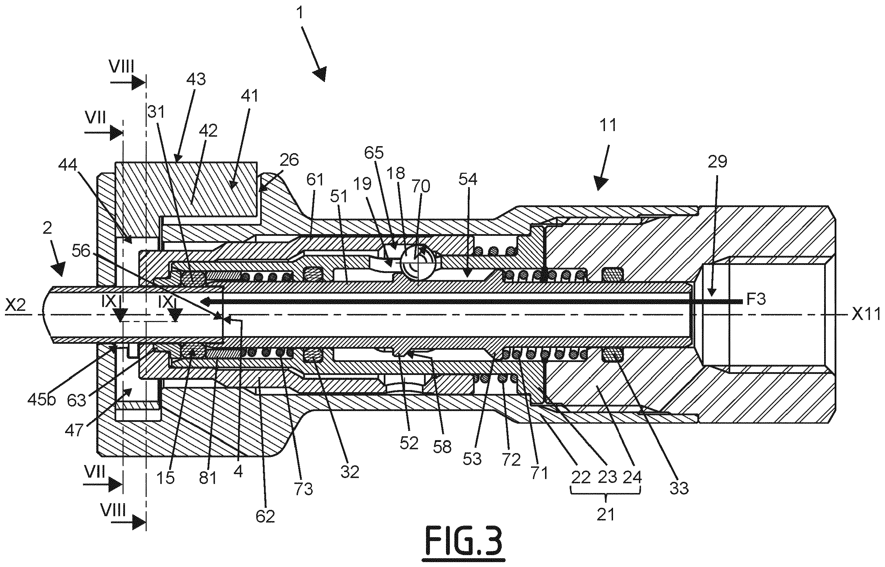

L'élément femelle de raccord 11 comprend un verrou 41 reçu dans le logement de verrou 26. Le verrou 41 est apte à verrouiller l'élément mâle de raccord 2, notamment si l'élément mâle est un tube de cuivre ou de laiton. Le verrou 41 est monté à coulissement dans le corps avant 22, transversalement par rapport à l'axe longitudinal X11, en particulier radialement par rapport à l'axe longitudinal X11, entre une position de retenue de l'élément mâle de raccord 2 dans le corps femelle 21, montrée sur les figures 3, 7 et 8, et une position de libération, montrée sur les figures 1, 2, 4 et 5, dans laquelle le verrou 41 ne s'oppose pas au retrait de l'élément mâle de raccord 2 hors du corps femelle 21 ni à l'introduction de l'élément mâle de raccord 2 dans le corps femelle 21. En position de libération, le verrou 41 est préférentiellement plus enfoncé dans le corps femelle 21 qu'en position de retenue. En particulier, en position de libération, le verrou 41 autorise le mouvement de l'élément mâle de raccord 2 dans le corps femelle 21, au moins longitudinalement. On définit un axe radial R11, qui est radial par rapport à l'axe longitudinal X11. Dans le présent exemple, le verrou 41 est mobile selon l'axe radial R11 par rapport au corps femelle 21.

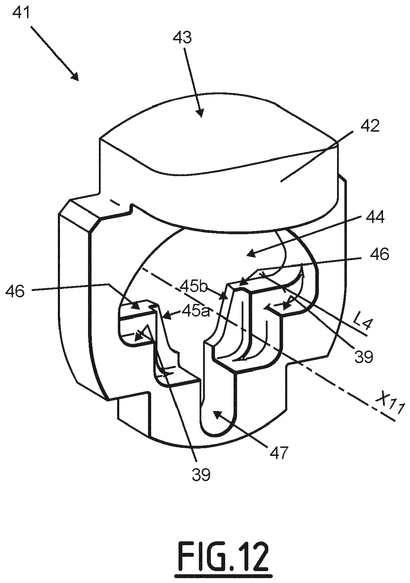

Le verrou 41, montré seul sur la figure 12, comprend une partie d'actionnement 42, avec une face externe 43, sur laquelle peut agir un opérateur. La face externe 43 est donc accessible de l'extérieur du corps femelle 21, en particulier de l'extérieur du logement de verrou 26 avec la partie d'actionnement 42 disposée au niveau du débouché radial du logement de verrou 26. Dans la position de retenue, la face externe 43 du verrou 41 est plus éloignée de l'axe longitudinal X11 que dans la position de libération.

Le verrou 41 comprend également une ouverture 44, qui traverse longitudinalement le verrou 41 et qui est destinée à recevoir l'élément mâle de raccord 2. L'élément mâle de raccord 2 traverse alors le verrou 41 via l'ouverture 44. Cette ouverture 44 délimite deux surfaces de verrouillage 45a et 45b. De préférence, les surfaces de verrouillage 45a, 45b délimitent chacune seulement une portion de l'ouverture 44 autour de l'axe X11.

Les deux surfaces de verrouillage 45a et 45b sont disposées de part et d'autre de l'axe X11, de préférence de façon symétrique par rapport à un plan radial contenant l'axe radial R11, par exemple le plan de coupe de la figure 1. Les deux surfaces de verrouillage 45a et 45b sont de préférence des surfaces planes.

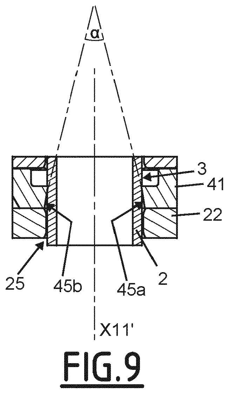

En coupe dans un plan orthoradial à l'axe longitudinal X11 traversant les surfaces de verrouillage 45a et 45b, c'est-à-dire un plan parallèle à l'axe longitudinal X11 et orthogonal à l'axe radial R1, les deux surfaces de verrouillage 45a et 45b sont inclinées l'une par rapport à l'autre, en formant ensemble un passage en V, c'est-à-dire une encoche évasée, plus large sur l'avant du côté de l'embouchure 25 que du côté arrière de l'élément femelle de raccord 11. Ce plan orthoradial à l'axe longitudinal X11 est par exemple le plan de la figure 9. En d'autres termes, en projection dans ce plan orthoradial à l'axe longitudinal X11, les surfaces de verrouillage 45a et 45b convergent avantageusement vers l'arrière de l'élément femelle de raccord 11. En coupe dans ce plan orthoradial à l'axe longitudinal X11, les surfaces de verrouillage 45a et 45b forment préférentiellement un angle α de 18° (degrés), où chaque surface de verrouillage 45a, 45b forme un angle de 9° par rapport à une direction longitudinale X11' parallèle à l'axe longitudinal X11.

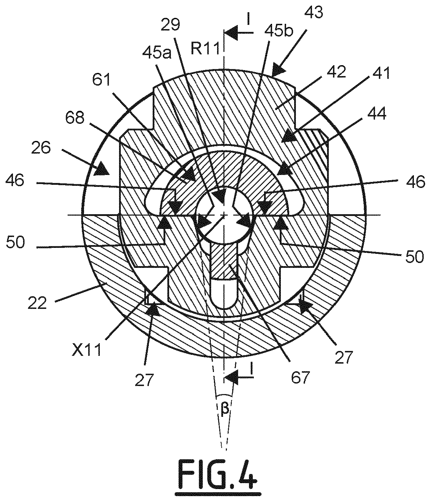

En coupe dans un plan orthogonal à l'axe longitudinal X11 traversant les deux surfaces de verrouillage 45a et 45b, par exemple le plan de la figure 4, les deux surfaces de verrouillage 45a et 45b sont inclinées l'une par rapport à l'autre. En coupe dans ce plan orthogonal, les surfaces de verrouillage 45a et 45b sont disposées de part et d'autre de l'axe radial R11. En projection dans ce plan orthogonal, le passage de l'ouverture 44 formé par les surfaces de verrouillage 45a, 45b est également en V, c'est-à-dire que le passage forme une encoche évasée, dont l'embouchure, plus proche de la partie d'actionnement 42 que le fond du passage en V, est plus large que le fond. En d'autres termes, en coupe dans ce plan orthogonal, les surfaces de verrouillage 45a et 45b convergent à l'opposé de la partie d'actionnement 42 et du débouché radial du logement 26 dans lequel la partie d'actionnement 42 est reçue. De préférence, en coupe dans ce plan orthogonal, les surfaces de verrouillage 45a et 45b forment ensemble un angle β de 30°, où chaque surface de verrouillage 45a, 45b forme un angle de 15° chacun par rapport à l'axe radial R11.

L'ouverture 44 délimite également deux surfaces de butée 46, qui sont orthoradiales à l'axe longitudinal X11. Autrement dit, les deux surfaces de butée 46 sont perpendiculaires à l'axe radial R11. Les deux surfaces de butée 46 s'étendent dans un même plan parallèle au plan orthoradial de la figure 9 ou dans un plan perpendiculaire au plan de la figure 1. Les surfaces de butée 46 s'étendent chacune à partir de l'une des surfaces de verrouillage 45a, 45b, en étant symétriques par rapport à un plan comprenant l'axe radial R11 et l'axe longitudinal X11. Les surfaces de butée 46 sont orientées vers la partie d'actionnement 42 du verrou 41.

Le verrou 41 délimite également deux surfaces de retenue 39, qui sont orthoradiales à l'axe longitudinal X11. Les surfaces de retenue 39 s'étendent dans un même plan parallèle au plan orthoradial de la figure 9. Les surfaces de retenue 39 s'étendent respectivement en arrière de chacune des surfaces de butée 46, en étant symétriques par rapport au plan comprenant l'axe radial R11 et l'axe longitudinal X11. Une surface axiale relie chacune des surfaces de butée 46 et la surface de retenue 39 qui lui est alignée axialement. Le long de l'axe radial R11, les surfaces de retenue 39 sont plus éloignées de face externe 43 du verrou 41 que les surfaces de butée 46.

L'ouverture 44 délimite également une rainure longitudinale d'indexage 47, qui débouche dans le passage en V formé par les surfaces de verrouillage 45a et 45b. La rainure longitudinale d'indexage 47 relie entre elles les surfaces de verrouillage 45a et 45b en étant traversée par le plan comprenant l'axe radial R11 et l'axe longitudinal X11.

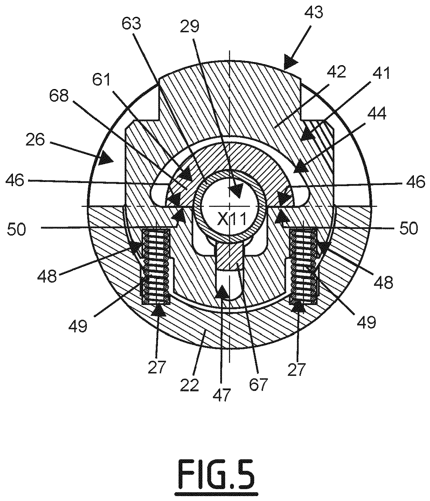

Comme montré sur la figure 5, l'élément femelle de raccord 11 comprend deux ressorts 49 hélicoïdaux de compression, qui constituent des moyens élastiques qui repoussent le verrou 41 vers sa position de retenue, en prenant appui sur le corps femelle 21. Le verrou 41 comprend avantageusement deux logements transversaux externes 48, qui s'étendent parallèlement à l'axe de coulissement du verrou 41, ici l'axe radial R11. Le corps avant 22 comprend avantageusement deux logements transversaux externes 27, qui s'étendent parallèlement à l'axe de coulissement du verrou 41, et sont disposés en regard des logements transversaux externes 48. Chaque ressort 49 est logé, à une extrémité transversale du ressort 49, dans l'un des logements transversaux externes 48 et, à une extrémité transversale opposée du ressort 49, dans l'un des logements transversaux externes 27.

Les moyens de rappel élastiques se présentant sous la forme des deux ressorts 49, ils offrent ainsi un effort élastique de rappel compatible avec l'effort de verrouillage souhaité pour l'élément mâle de raccord 2.

Comme cela est particulièrement visible aux figures 1 à 3, l'élément femelle de raccord 11 comprend une bague poussoir 51, qui constitue un exemple préférentiel d'un poussoir. La bague poussoir 51 est avantageusement de forme générale tubulaire coaxiale avec l'axe longitudinal X11. La bague poussoir 51 est montée mobile à l'intérieur du corps intermédiaire 23, dans le canal interne 29 du corps femelle 21. De préférence, la bague poussoir 51 coulisse longitudinalement par rapport au corps femelle 21 mais est radialement solidaire du corps femelle 21. On prévoit avantageusement que le corps intermédiaire 23 supporte et guide la bague poussoir 51 dans ce coulissement, la bague poussoir 51 étant reçue à l'intérieur du corps intermédiaire 23.

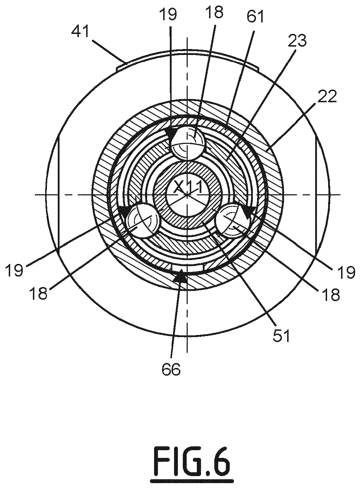

Le corps intermédiaire 23 comprend trois logements allongés 19, qui logent chacun une bille d'actionnement 18. Comme montré sur la figure 6, trois billes d'actionnement 18, logées dans trois logements allongés respectifs 19, sont avantageusement prévues. Chaque logement allongé 19 traverse radialement le corps intermédiaire 23. Les logements allongés 19 sont avantageusement répartis de façon régulière autour de l'axe longitudinal X11, en étant tous disposés au même niveau longitudinal sur l'axe longitudinal X11. Par « allongé », on entend que chaque logement allongé 19 est allongé dans le sens longitudinal. Dans le sens orthoradial, chaque logement allongé 19 est préférentiellement de largeur ajustée au diamètre de la bille d'actionnement 18 que ce logement allongé 19 reçoit.

L'élément femelle de raccord 11 comprend deux joints d'étanchéité auxiliaires 32 et 33 toriques, qui sont logés dans deux gorges internes 16 et 17 respectives du corps femelle 21. Les joints d'étanchéité auxiliaires 32 et 33 ainsi que les gorges 16 et 17 sont avantageusement coaxiaux avec l'axe longitudinal X11. Le joint d'étanchéité auxiliaire 32 et la gorge 16 sont avantageusement prévus sur le corps intermédiaire 23. Le joint d'étanchéité auxiliaire 33 et la gorge 17 sont avantageusement prévus sur le corps arrière 24. Les deux joints d'étanchéité auxiliaires 32 et 33 sont disposés longitudinalement de part et d'autre des logements allongés 19, le joint d'étanchéité auxiliaire 32 étant disposé à l'avant, alors que le joint d'étanchéité auxiliaire 33 est disposé à l'arrière. Les joints d'étanchéité auxiliaires 32 et 33 sont radialement interposés entre le corps femelle 21 et le poussoir 51, afin d'assurer l'étanchéité entre le corps femelle 21 et le poussoir 51. Les joints d'étanchéité auxiliaires 32 et 33 sont conçus pour assurer l'étanchéité entre la bague poussoir 51 et le corps femelle 21 quelle que soit la position longitudinale de la bague poussoir 51 dans le corps femelle 21.

La bague poussoir 51 comprend une collerette avant 52 et une collerette arrière 53 qui délimitent, longitudinalement entre elles, un volume 54 de réception partielle des billes d'actionnement 18, le volume 54 étant avantageusement de forme annulaire. La collerette avant 52 comprend, à l'arrière, une surface de contact 58 destinée à entrer en contact avec les billes d'actionnement 18 lors d'un déplacement vers l'arrière de la bague poussoir 51, afin d'entraîner les billes d'actionnement 18 vers l'arrière Les billes d'actionnement 18 coopèrent donc longitudinalement avec la bague poussoir 51. La surface de contact 58 délimite le volume 54.

L'élément femelle de raccord 11 comprend également un ressort 71, qui est longitudinalement interposé entre le corps arrière 24 et la bague poussoir 51. Le ressort 71 repousse longitudinalement la bague poussoir 51 vers l'embouchure 25 du corps avant 22, c'est-à-dire vers une position avant de la bague poussoir 51 par rapport au corps femelle 21. Sur la figure 1, la bague poussoir 51 est en position avant. La collerette arrière 53 assure avantageusement un appui axial pour le ressort 71.

La bague poussoir 51 délimite un lamage avant 55. Le lamage avant 55 est longitudinalement délimité, vers l'arrière, par un épaulement longitudinal 56 de la bague poussoir 51. Le lamage avant 55 débouche, vers l'avant, à l'extérieur de la bague poussoir 51, à une extrémité avant 12 de la bague poussoir 51.

L'élément femelle de raccord 11 comprend une bague mémoire 61. La bague mémoire 61 est avantageusement de forme générale tubulaire coaxiale avec l'axe longitudinal X11. La bague mémoire 61 est montée radialement entre le corps avant 22 et le corps intermédiaire 23, c'est-à-dire que le corps avant 22 entoure la bague mémoire 61, alors que la bague mémoire 61 entoure le corps intermédiaire 23. Le corps avant 22 entoure également le corps intermédiaire 23. Ainsi, la bague poussoir 51 et la bague mémoire 61 sont disposées radialement de part et d'autre du corps intermédiaire 23.

La bague mémoire 61 est montée avec possibilité de coulissement longitudinal par rapport au corps femelle 21, mais est solidaire radialement du corps femelle 21. Cette bague mémoire 61 comprend une bague externe 62 et une bague interne annulaire 63. La bague interne annulaire 63 est montée flottante dans la bague externe 62. En particulier, la bague interne annulaire 63 peut coulisser longitudinalement par rapport à la bague externe 62, et pivoter autour de l'axe longitudinal X11, même si ces mouvements ne sont pas nécessaires au fonctionnement de l'élément femelle de raccord 11. En variante, on pourrait prévoir que la bague externe 62 et la bague interne annulaire 63 sont fixement solidaires l'une avec l'autre, par exemple par collage.

L'élément femelle de raccord 11 comprend un ressort 72, qui, par rapport au corps femelle 21, repousse longitudinalement la bague mémoire 61 en direction de l'embouchure 25 du corps avant 22, dans l'ouverture 44 du verrou 41. Pour cela, le ressort 72 prend axialement appui, parallèlement à l'axe longitudinal X11, sur le corps intermédiaire 23 et sur une face arrière 64 de la bague externe 62 de la bague mémoire 61.

De préférence, l'effort élastique exercé par le ressort 72 est inférieur à l'effort élastique exercé par le ressort 71.

La bague externe 62 comprend une gorge interne 65 périphérique. De préférence, pour des questions de montage de l'élément femelle de raccord 11, la bague externe 62 comprend également un orifice de montage 66, avantageusement unique, qui débouche dans la gorge interne 65 et au niveau de la surface externe de la bague externe 62. L'orifice 66 traverse radialement la bague externe 62. La gorge interne 65 délimite un volume de réception partielle des billes d'actionnement 18. Le diamètre de l'orifice 66 est légèrement supérieur au diamètre de chaque bille d'actionnement 18.

Les billes d'actionnement 18 sont destinées à entrer en contact avec une surface de contact 70 de la gorge interne 65, à l'arrière de ladite gorge interne 65. Les billes d'actionnement 18 coopèrent donc longitudinalement avec la bague mémoire 61.

Les surfaces de contact 58 et 70 ont sensiblement la même inclinaison relativement à l'axe longitudinal X11, de préférence une inclinaison oblique par rapport à l'axe longitudinal X11.

Comme cela est mieux visible sur les figures 4, 5, 7, 8 et 11, la bague externe 62 de la bague mémoire 61 comprend une languette d'indexage 67 et une demi-couronne 68 qui s'étendent vers l'avant de la bague externe 62. Ici, la languette d'indexage 67 et la demi-couronne 68 sont à l'extrémité avant de la bague mémoire 61. La bague interne annulaire 63 coopère longitudinalement avec la bague externe 62 au niveau de la languette d'indexage 67 et au niveau de la demi-couronne 68, soit en étant flottante, soit en étant fixement solidaire.

La bague mémoire 61 comprend des surfaces de butée 50 orthoradiales par rapport à l'axe longitudinal X11, qui, dans le présent exemple, s'étendent dans un même plan orthoradial parallèle au plan orthoradial de la figure 9. Autrement dit, les deux surfaces de butée 50 sont perpendiculaires à l'axe radial R11. Les surfaces de butée 50 sont formées par la demi-couronne 68.

La languette d'indexage 67 est introduite dans la rainure longitudinale d'indexage 47, ce qui guide le coulissement du verrou 41 le long de l'axe radial R11 et empêche la rotation du verrou 41 et de la bague mémoire 61 l'un par rapport à l'autre autour de l'axe longitudinal X11.

La demi-couronne 68 est engagée dans l'ouverture 44.

L'élément femelle de raccord 11 comprend une bague d'ajustement 81 annulaire, préférentiellement coaxiale avec l'axe longitudinal X11, qui est logée radialement entre la bague poussoir 51 et le corps intermédiaire 23. Par exemple, la bague d'ajustement 81 coulisse longitudinalement dans le corps intermédiaire 23, en étant pour cela guidée par la surface radiale interne de recouvrement 14.

L'élément femelle de raccord 11 comprend un ressort 73, qui repousse longitudinalement la bague d'ajustement 81 vers l'embouchure 25 du corps avant 22. Le ressort 73 est interposé entre le corps intermédiaire 23 et une face arrière 82 de la bague d'ajustement 81.

L'élément femelle de raccord 11 comprend un joint d'étanchéité principal 31 et définit un logement principal 15 pour ce joint d'étanchéité principal 31. Le joint d'étanchéité principal 31 est par exemple un joint torique en éthylène propylène. Le joint d'étanchéité principal 31 est avantageusement coaxial avec l'axe longitudinal X11 et est monté dans le logement principal 15. Une face avant de la bague d'ajustement 81 forme une paroi axiale arrière 83 du logement principal 15. La face arrière de la bague interne annulaire 63 de la bague mémoire 61 forme une paroi axiale avant 69 du logement principal 15. Le logement principal 15 du joint d'étanchéité principal 31 est donc délimité longitudinalement par la bague mémoire 61 d'une part et la bague d'ajustement 81 d'autre part. En configuration désaccouplée, la bague mémoire 61 forme une paroi radiale interne du logement principal.

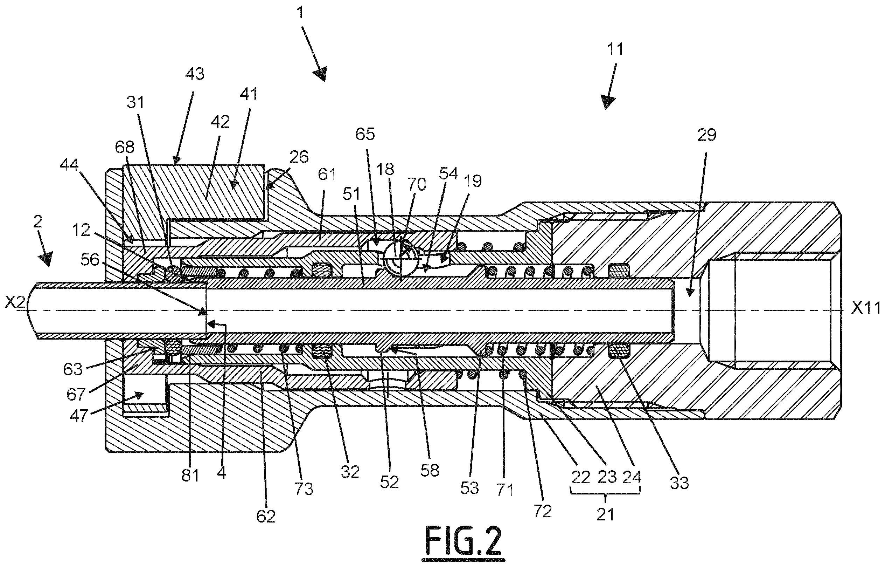

L'élément femelle de raccord 11 est conçu pour adopter une configuration accouplée, montrée sur la figure 3 et une configuration désaccouplée, montrée sur la figure 1. Ces configurations accouplée et désaccouplée sont propres à l'élément femelle de raccord 11, quelle que soit la position de l'élément mâle de raccord 2 par rapport à l'élément femelle de raccord 11. Ces configurations accouplée et désaccouplée traduisent un positionnement relatif des différentes parties de l'élément femelle de raccord 11, en particulier, le corps femelle 21, le joint d'étanchéité principal 31, le verrou 41, la bague poussoir 51 et la bague mémoire 61. Sur la figure 2, l'élément femelle de raccord 11 est dans une configuration intermédiaire obtenue à l'accouplement, c'est-à-dire entre la configuration désaccouplée et la configuration accouplée.

Comme montré sur les figures 1, 4, 5 et 6, en configuration désaccouplée de l'élément femelle de raccord 11, le ressort 72 repousse la bague externe 62 de la bague mémoire 61 vers l'avant par rapport au corps femelle 21, jusqu'à une position avancée dans laquelle la bague externe 62 est en butée vers l'avant contre le corps avant 22.

En configuration désaccouplée de l'élément femelle de raccord 11, la bague poussoir 51 est repoussée dans la position avant par rapport au corps femelle 21, en butée vers l'avant contre la bague interne annulaire 63 de la bague mémoire 61.

En configuration désaccouplée de l'élément femelle de raccord 11, le joint d'étanchéité principal 31 est disposé autour d'une surface radiale externe 57 au niveau d'une partie de diamètre externe longitudinalement constant de la bague poussoir 51. Le joint d'étanchéité principal 31 est étiré autour de la bague poussoir 51. Ainsi, en configuration désaccouplée, la bague poussoir 51 est interposée radialement entre le lamage avant 55 et le joint d'étanchéité principal 31. Le joint d'étanchéité principal 31 est longitudinalement décalé, vers l'avant, par rapport au corps intermédiaire 23 du corps femelle 21, en étant disposé axialement par-delà l'extrémité avant du corps intermédiaire 23.

En configuration désaccouplée de l'élément femelle de raccord 11, chaque bille d'actionnement 18 est confinée dans son logement allongé 19 respectif, entre une extrémité avant du logement allongé 19 et une surface arrière de la gorge interne 65 de la bague mémoire 61.

En configuration désaccouplée de l'élément femelle de raccord 11, les surfaces de butée 46 du verrou 41 coopèrent dans une direction transversale avec les surfaces de butée 50 de la bague mémoire 61, alors que la bague mémoire 61 est en position avancée. En d'autres termes, dans cette configuration désaccouplée où la bague mémoire 61 est en position avancée, les surfaces de butée 46 et 50 sont à même niveau le long de l'axe longitudinal X11 de sorte à être en appui transversal deux à deux. Ainsi, la bague mémoire 61 maintient le verrou 41 en position de libération dans le corps femelle 21, c'est-à-dire une position enfoncée, à l'encontre de l'action des deux ressorts 49. En position de libération, les surfaces de verrouillage 45a et 45b sont plus éloignées de l'axe longitudinal X11 selon l'axe radial R11 qu'en position de retenue de manière à autoriser le mouvement de l'élément mâle de raccord 2 dans le canal interne 29.

En configuration désaccouplée de l'élément femelle de raccord 11, la bague d'ajustement 81 est repoussée vers l'avant, au contact du joint d'étanchéité principal 31, par le ressort 73. Pour cela, le ressort 73 prend appui sur le corps intermédiaire 23. De préférence, la bague d'ajustement 81 est alors radialement entourée par la surface interne inclinée 30, en étant axialement à son niveau.

Pour faire passer l'élément femelle de raccord 11 de la configuration désaccouplée à la configuration accouplée, on effectue un accouplement de l'élément femelle de raccord 11 avec l'élément mâle de raccord 2, comme montré dans l'ordre sur les figures 1, 2 et 3. Comme expliqué ci-dessous, cet accouplement est automatique.

Comme montré sur la figure 1, pour cet accouplement, l'extrémité avant 4 de l'élément mâle de raccord 2 est introduite dans l'embouchure 25 du corps avant 22 et est engagée dans la bague mémoire 61, puis dans le lamage avant 55 délimité par la bague poussoir 51, alors que la bague poussoir 51 est en position avant. Une fois l'élément mâle de raccord 2 engagé dans le lamage avant 55, les axes longitudinaux X2 et X11 deviennent sensiblement coaxiaux. L'élément mâle de raccord 2, déplacé en direction du corps arrière 24 de l'élément femelle de raccord 11, vient alors en butée longitudinale contre l'épaulement longitudinal 56 de la bague poussoir 51, comme montré sur la figure 2. La bague poussoir 51 est interposée radialement entre l'extrémité avant 4 de l'élément mâle de raccord 2 et le joint d'étanchéité principal 31, la bague poussoir 51 ayant une fonction de bague d'interface pour protéger le joint d'étanchéité principal 31 d'éventuelles bavures ou irrégularités abrasives qui pourraient être formées à l'extrémité avant 4. En d'autres termes, en configuration désaccouplée, la bague poussoir 51 protège le joint d'étanchéité principal 31 vis-à-vis des bavures éventuelles situées à l'extrémité avant 4 de l'élément mâle de raccord 2 introduit dans l'élément femelle de raccord 11.

Le mouvement d'emmanchement de l'élément mâle de raccord 2 dans l'élément femelle de raccord 11 se poursuit, l'élément mâle de raccord 2 entraînant ainsi la bague poussoir 51 vers l'arrière de l'élément femelle de raccord 11, à l'encontre de l'action du ressort 71. L'élément femelle de raccord 11 adopte une configuration intermédiaire d'accouplement entre la configuration accouplée et la configuration désaccouplée. La bague poussoir 51 se décale longitudinalement par rapport au joint d'étanchéité principal 31, vers l'arrière de l'élément mâle de raccord 2. Par ce décalage longitudinal de la bague poussoir 51, le joint d'étanchéité principal 31 est directement en regard radial d'un volume d'accueil de l'élément mâle de raccord 2 dans l'élément femelle de raccord 11. Le joint d'étanchéité principal 31 se rétreint radialement autour de l'élément mâle de raccord 2 et entre en contact radial interne avec la surface radiale externe 3 et à distance de l'extrémité avant 4, en direction de l'arrière de l'élément mâle de raccord 2, la distance à l'extrémité avant 4 correspondant à la profondeur du lamage avant 55 selon l'axe longitudinal X11. Le joint d'étanchéité principal 31 entre ainsi en contact avec l'élément mâle de raccord 2 à un lieu axial où le risque de bavures abrasives est moins important qu'à l'extrémité avant 4, ce qui préserve l'intégrité du joint d'étanchéité principal 31.

Comme montré sur la figure 2, dès lors que la bague poussoir 51 est décalée vis-à-vis du joint d'étanchéité principal 31, la collerette avant 52 de la bague poussoir 51 entre en contact longitudinal avec les billes d'actionnement 18, alors que les billes d'actionnement 18 sont en butée vers l'arrière contre la gorge interne 65 de la bague mémoire 61. Pour cela, une distance longitudinale L1, mesurée parallèlement à l'axe longitudinal X11 en configuration désaccouplée, entre l'extrémité avant 12 de la bague poussoir 51 et l'extrémité avant de la bague d'ajustement 81 formant la paroi axiale arrière 83 du logement principal 15, est inférieure ou égale à une distance longitudinale L2, mesurée parallèlement à l'axe longitudinal X11 en configuration désaccouplée, entre les billes d'actionnement 18, en butée arrière contre la gorge interne 65, et la surface de contact 58 de la collerette avant 52.

La poursuite du mouvement d'emmanchement de l'élément mâle de raccord 2, qui provoque le recul de la bague poussoir 51 vers l'arrière du corps femelle 21, entraîne également la bague mémoire 61 vers l'arrière par rapport au corps femelle 21, par l'intermédiaire des billes d'actionnement 18. En effet, le mouvement de recul de la bague poussoir 51 conduit à mettre les billes d'actionnement 18 en interposition axiale entre les surfaces de contact 58 et 70 respectives de la bague poussoir 51 et de la bague mémoire 61, de sorte que, à cette mise en contact des billes d'actionnement 18 avec les surfaces de contact 58 et 70, la bague poussoir 51 devient axialement solidaire de la bague mémoire 61 dans son déplacement vers l'arrière du corps femelle 21. Ainsi les billes d'actionnement 18 forment des moyens de transmission du mouvement de recul de la bague poussoir 51 à la bague mémoire 61, pour déplacer la bague mémoire 61 vers une position reculée de la bague mémoire. Sur la figure 3, la bague mémoire 61 est en position reculée. Les billes d'actionnement 18 assurent une transmission du mouvement de recul de la bague poussoir 51 à la bague mémoire 61 dans un faible encombrement radial et facilitent le montage des bagues mémoire 61 et poussoir 51 de part et d'autre du corps intermédiaire 23 du corps femelle 21.

La collerette avant 52, les logements allongés 19 et la gorge interne 65 sont configurés pour conférer à la bague poussoir 51 une possibilité de mouvement longitudinal par rapport à la bague mémoire 61, à partir de la configuration désaccouplée. Ainsi, à partir de la configuration désaccouplée, lors de l'emmanchement de l'élément mâle de raccord 2, on obtient une séquence de mouvement selon laquelle la bague poussoir 51 est déplacée en premier lieu vers l'arrière, alors que la bague mémoire 61 reste en position avancée, le déplacement de la bague mémoire 61 ne se produisant qu'en second lieu.

Le déplacement de la bague mémoire 61 vers l'arrière par rapport au corps femelle 21 entraîne le joint d'étanchéité principal 31 vers l'arrière, par l'intermédiaire de la paroi axiale avant 69 formée sur la bague interne annulaire 63. Le joint d'étanchéité principal 31 vient alors axialement au niveau de la surface interne inclinée 30 puis de la surface radiale interne 14 de façon à être radialement entouré et enserré par le corps intermédiaire 23, ce qui entraîne un léger aplatissement radial du joint d'étanchéité principal 31, au fur et à mesure de son déplacement vers l'arrière. La bague interne annulaire 63 s'engage alors partiellement dans le corps intermédiaire 23. Sous l'action de la bague mémoire 61, le joint d'étanchéité principal 31 repousse la bague d'ajustement 81 vers l'arrière à l'encontre du ressort 73, de sorte que la bague d'ajustement 81 est axialement décalée vers l'arrière par rapport à la surface interne inclinée 30. De préférence, la bague d'ajustement 81 est alors radialement entourée par la surface radiale interne de recouvrement 14 sur toute sa longueur. La bague d'ajustement 81 accommode la longueur axiale du logement principal 15 alloué au joint d'étanchéité principal 31 en se déplaçant vers l'arrière, à l'encontre de son ressort 73, comme cela est visible en comparant les figures 2 et 3. Le logement principal 15 de l'élément femelle de raccord 11 est donc variable à la fois en dimensions et en position dans le corps femelle 21 entre la configuration désaccouplée et la configuration accouplée de l'élément femelle de raccord 11. En configuration accouplée, le joint d'étanchéité principal 31 assure une étanchéité entre l'élément mâle de raccord 2 et le corps femelle 21 de l'élément femelle de raccord 11.

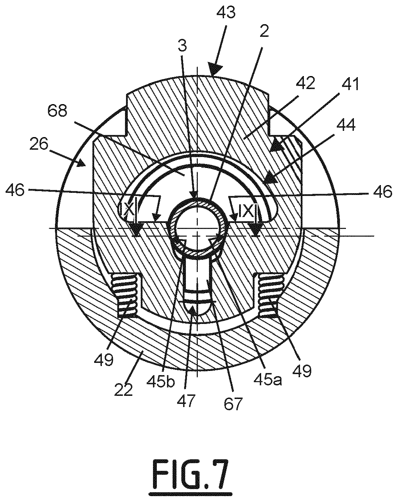

Comme montré sur les figures 3 et 7, lorsque la bague mémoire 61 est décalée vers l'arrière jusqu'à la position reculée sous l'action de la bague poussoir 51, les surfaces de butée 50 de la bague mémoire 61 se décalent par rapport aux surfaces de butée 46 du verrou 41 dans la direction longitudinale et les surfaces de butée 50 de la bague mémoire 61 parviennent en regard des surfaces de retenue 39 du verrou 41 dans la direction radiale R11. Le décalage des surfaces de butées 46 et 50, obtenu en position reculée de la bague mémoire 61 autorise le déplacement du verrou 41 vers sa position de retenue, si bien que le verrou 41 est repoussé par ses deux ressorts 49 vers la position de retenue, c'est-à-dire, ici, une position moins enfoncée par rapport au corps femelle 21. Dans cette position reculée, la bague mémoire 61 autorise ainsi le déplacement du verrou 41 vers sa position de retenue sous l'action des ressorts 49. En configuration accouplée, la bague mémoire 61 est en position reculée et le verrou 41 est en position de retenue.

La position reculée de la bague mémoire 61 est obtenue lorsque la bague poussoir 51 est dans une position arrière par rapport au corps femelle 21, parallèlement à l'axe longitudinal X11, comme montré sur la figure 3. Ainsi la bague poussoir 51 dans son mouvement jusqu'à sa position arrière entraîne la bague mémoire 61 jusqu'à sa position reculée. Dans cette position arrière, la bague poussoir 51 est en butée arrière contre la bague mémoire 61 par l'intermédiaire des billes d'actionnement 18. En configuration accouplée, la bague poussoir 51 est en position arrière.

Dans la position de retenue du verrou 41, les surfaces de verrouillage 45a et 45b sont dans une position de coopération avec l'élément mâle de raccord 2, en particulier avec sa surface radiale externe 3. Chaque surface de verrouillage 45a, 45b coopère localement avec la surface radiale externe 3. Le verrou 41 exerce ainsi une retenue longitudinale de l'élément mâle de raccord 2 par rapport au verrou 41, dans l'ouverture 44. Du fait de leur orientation particulière décrite plus haut, les surfaces de verrouillage 45a et 45b forment un coin pour la retenue de l'élément mâle de raccord 2 dans le corps femelle 21 à la fois selon l'axe radial R11 et selon l'axe longitudinal X11. Les surfaces de verrouillage 45a et 45b s'ancrent dans l'élément mâle de raccord 2 en particulier lorsque l'élément mâle de raccord 2 est en cuivre ou laiton.

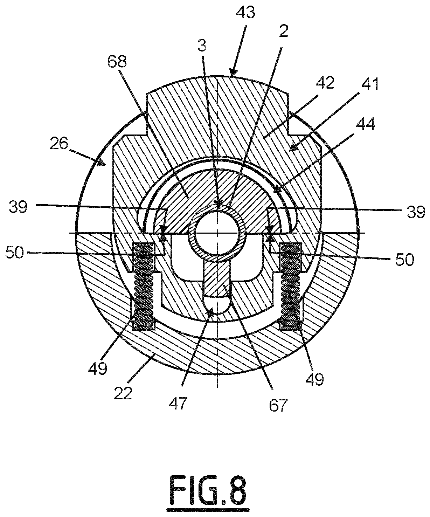

Comme montré aux figures 3 et 8, dans cette position de retenue, les deux surfaces de retenue 39 du verrou 41 sont en vis-à-vis des surfaces de butée 50 de la bague mémoire 61, dans la direction transversale. En position de retenue, les surfaces de retenue 39 du verrou sont transversalement à distance des surfaces de butée 50 de la bague mémoire 61, le verrou 41 arrivant en butée transversale contre l'élément mâle de raccord 2 par l'intermédiaire des surfaces de verrouillage 45a, 45b. En position de retenue, en configuration accouplée, l'éventuelle mise en butée radiale du verrou 41 sur la bague mémoire 61 permet de limiter la déformation de l'élément mâle de raccord 2 par les surfaces de verrouillage 45a, 45b.

On définit une distance longitudinale L3, mesurée selon l'axe longitudinal X11, qui est la distance parcourue par la paroi axiale avant 69 par rapport au corps intermédiaire 23, pour le recouvrement du joint d'étanchéité principal 31 par la surface radiale interne de recouvrement 14 du corps femelle 21. En d'autres termes, c'est la distance longitudinale parcourue vers l'arrière par la bague mémoire 61, en particulier par la bague interne annulaire 63, à partir de la position avancée, jusqu'à ce que la paroi axiale avant 69 ait atteint l'extrémité avant de la surface radiale interne de recouvrement 14, à la jonction entre la surface radiale interne de recouvrement 14 et la surface interne inclinée 30. Au maximum, cette distance longitudinale L3 peut être égale à la distance parcourue par la bague mémoire 61, en particulier la bague interne annulaire 63, entre la position avancée et la position reculée, par rapport au corps intermédiaire 23. Cette distance longitudinale L3 est préférentiellement égale à une distance longitudinale, mesurée selon l'axe longitudinal X11 entre d'une part, la paroi axiale avant 69 du logement principal 15, formée par la bague mémoire 61, et, d'autre part, l'extrémité avant de la surface radiale interne de recouvrement 14 du corps intermédiaire 23, lorsque l'élément femelle de raccord 11 est en configuration désaccouplée.

On définit une distance longitudinale L4, mesurée selon l'axe longitudinal X11, qui est la longueur longitudinale d'engagement entre les surfaces de butée 46 du verrou 41 et les surfaces de butée 50 de la bague mémoire 61 en configuration désaccouplée. Lorsque la bague mémoire 61 recule de la distance longitudinale L4, le verrou 41 passe d'une configuration où ledit verrou 41 est maintenu par la bague mémoire 61 dans sa position de libération à une configuration où ledit verrou 41 est autorisé à se déplacer vers sa position de retenue.

Entre la configuration désaccouplée et la configuration accouplée, on garantit l'étanchéité entre le corps femelle 21 et l'élément mâle de raccord 2 emmanché au sein du corps femelle 21 avant que ou dès que les surfaces de verrouillage 45a et 45b du verrou 41 coopèrent avec l'élément mâle de raccord 2, grâce au fait que la distance longitudinale L3 est inférieure ou égale à la distance longitudinale L4.

Dans tout le déplacement axial de la bague poussoir 51 entre la position avant et la position arrière, les joints d'étanchéité 32 et 33 restent interposés radialement entre la bague poussoir 51 et le corps intermédiaire 23.

Une fois la configuration accouplée atteinte, l'opérateur peut relâcher l'élément mâle de raccord 2, qui se trouve emmanché et verrouillé dans l'élément femelle de raccord 11. Une fois l'élément mâle de raccord 2 relâché, un ensemble comprenant la bague mémoire 61, les billes d'actionnement 18, la bague poussoir 51 et l'élément mâle de raccord 2 est repoussé vers l'avant par rapport au corps femelle 21, jusqu'à ce que le verrou 41 parvienne en butée avant contre le corps avant 22. On obtient ainsi un rattrapage du jeu axial du verrou 41 dans le logement de verrou 26 ménagé dans le corps femelle 21. Les surfaces de verrouillage 45a et 45b du verrou 41 sont ancrées dans la surface radiale externe 3 de l'élément mâle de raccord 2 et maintiennent l'élément mâle de raccord 2 par rapport au verrou 41, donc par rapport au corps femelle 21, le long de l'axe longitudinal X11. En position de retenue du verrou 41, les surfaces de verrouillage 45a et 45b du verrou 41 sont rapprochées de l'axe longitudinal X11, de façon à s'étendre partiellement dans le volume d'accueil de l'élément mâle de raccord 2 dans l'élément femelle de raccord 11 et à coopérer avec l'élément mâle de raccord 2. Le remplissage du réservoir peut alors avoir lieu depuis la canalisation 99, successivement au travers de la partie du canal interne 29 formée par le corps arrière 24, du poussoir 51 et de l'élément mâle de raccord 2, selon une flèche F3 montrée sur la figure 3.

En définitive, la mise en configuration accouplée est automatique, puisque le mouvement longitudinal d'introduction de l'élément mâle de raccord 2 dans le corps femelle 21 entraîne automatiquement le verrouillage de l'élément mâle de raccord 2 par le verrou 41, par déplacement de la bague mémoire 61. La position accouplée peut facilement être identifiée par l'opérateur, de façon visuelle, puisque la position de retenue du verrou 41, ici moins enfoncée que la position de libération du verrou 41, est visible de l'extérieur du raccord 1.

Par ailleurs, puisque le verrou 41 qui, en configuration accouplée, assure le verrouillage de l'élément mâle de raccord 2, est à coulissement radial, l'élément femelle de raccord 11 définit, à partir de l'embouchure 25, un volume d'accueil de l'élément mâle de raccord 2 de dimension longitudinale réduite, notamment par rapport à EP1916464. Le joint d'étanchéité principal 31 se déplaçant avec la bague mémoire 61, la distance longitudinale sur laquelle le joint d'étanchéité principal racle la surface radiale externe 3 de l'élément mâle de raccord 2 est donc relativement réduite.

Le recours à un poussoir se présentant sous la forme de la bague poussoir 51, en étanchéité de part et d'autre des logements allongés 19 du corps femelle 21, permet d'assurer une étanchéité directe entre le corps femelle 21 et l'élément mâle de raccord 2 par le joint d'étanchéité principal 31.

Pour désaccoupler le raccord 1, c'est-à-dire passer de la configuration accouplée à la configuration désaccouplée alors que l'élément mâle de raccord 2 est verrouillé par le verrou 41, l'opérateur actionne le verrou 41 de façon à le faire passer en position de libération à l'encontre des ressorts 49, c'est-à-dire, ici, en appuyant sur la face externe 43.. Le mouvement du verrou 41 à l'encontre des ressorts 49 est limité par la venue en butée de la partie d'actionnement 42 du verrou 41 contre le corps avant 22 selon l'axe R11. Le verrou 41 étant en position de libération, les surfaces de verrouillage 45a, 45b ont quitté le contact de l'élément mâle de raccord 2 et ont été déplacées hors du volume d'accueil de l'élément mâle de raccord 2 dans l'élément femelle de raccord 11, de sorte que ledit élément mâle de raccord 2 peut être extrait de l'élément femelle de raccord 11, en étant déplacé vers l'arrière le long de l'axe longitudinal X11. La bague poussoir 51 suit le mouvement de retrait de l'élément mâle de raccord 2 et vient s'intercaler radialement entre le joint d'étanchéité principal 31 et l'axe central longitudinal X11. De préférence, à l'extrémité avant 12 de la bague poussoir 51, la surface radiale externe 57 forme une surface externe d'étirement 59, qui présente une forme en biseau, convergente vers l'avant, afin d'étirer progressivement le joint d'étanchéité principal 31 autour de la bague poussoir 51 lors du mouvement de la bague poussoir 51 vers la position avant.

Sous l'action du ressort 72, la bague mémoire 61 est repoussée vers l'avant, jusqu'à arriver en butée avant contre le corps femelle 21, c'est-à-dire jusqu'à arriver en position avancée. Une fois cette position atteinte par la bague mémoire 61, les surfaces de butée 50 de la bague mémoire 61 sont en regard des surfaces de butée 46 du verrou selon l'axe radial R11.

Lorsque l'opérateur relâche ensuite le verrou 41, le verrou 41 est repoussé par les ressorts 49. Le verrou 41 est maintenu en position de libération, ici la position enfoncée, par coopération des surfaces de butée 46 du verrou 41 avec les surfaces de butée 50 de la bague mémoire 61. La bague poussoir 51 est en position avant et s'étend à proximité de l'embouchure 25, dans un volume d'admission de l'élément mâle de raccord 2 dans le corps femelle 21, si l'on souhaite à nouveau procéder à un accouplement. La configuration désaccouplée montrée sur la figure 1 est atteinte. Plus généralement, l'élément femelle de raccord 11 est prêt pour un autre accouplement automatique.

Pour fabriquer l'élément femelle de raccord 11, on met préférentiellement en œuvre un procédé comprenant les étapes successives suivantes :
- montage des deux ressorts de verrou 49 et du verrou 41 dans le corps avant 22 ;
- introduction du joint d'étanchéité auxiliaire 32 dans sa gorge 16 dans le corps intermédiaire 23 ;
- engagement de la bague poussoir 51 dans le corps intermédiaire 23 par l'extrémité arrière du corps intermédiaire 23 ;
- introduction de la bague d'ajustement 81 et du ressort 73 entre le corps intermédiaire 23 et la bague poussoir 51 ;
- mise en place du joint d'étanchéité principal 31 autour de la bague poussoir 51, en étirant le joint d'étanchéité principal 31 autour de la surface externe d'étirement 59 de la bague poussoir 51 ;
- après assemblage de la bague interne annulaire 63 et de la bague externe 62, mise en place du ressort 72 et de la bague mémoire 61 autour du corps intermédiaire 23 ;
- introduction de chaque bille d'actionnement 18 dans son logement allongé 19 respectif, par l'intermédiaire de l'orifice de montage 66, en faisant tourner la bague mémoire 61 par rapport au corps intermédiaire 23 autour de l'axe longitudinal X11 ;
- montage d'un ensemble, obtenu avec les étapes précédentes, dans le corps avant 22, en engageant la languette d'indexage 67 dans la rainure longitudinale d'indexage 47 du verrou 41, en maintenant le verrou 41 en position de libération jusqu'à mettre la bague mémoire 61 en butée avant contre le corps avant 22 ;
- montage du ressort 71 de la bague poussoir 51 en appui contre la collerette arrière 53 de la bague poussoir 51 ;
- mise en place du joint d'étanchéité auxiliaire 33 dans la gorge 17 du corps arrière 24 ;
- vissage de l'extrémité avant du corps arrière 24 avec l'extrémité arrière du corps avant 22 jusqu'à ce que le corps arrière 24 vienne en butée avant contre le corps avant 22, le corps intermédiaire 23 étant axialement pris en sandwich entre le corps avant 22 et le corps arrière 24.

En variante non représentée, à la place de billes d'actionnement 18 interposées entre la bague poussoir 51 et la bague mémoire 61, on peut prévoir des pions fixés sur la bague mémoire 61 et/ou sur la bague poussoir 51.

En variante non représentée, à la place de surfaces de butée 46 et 50, ainsi que des surfaces de retenue 39, qui sont ici planes et coopèrent ensemble de manière surfacique dans la direction transversale, on peut prévoir une coopération ponctuelle ou linéique dans la direction transversale pour obtenir les mêmes effets.

En variante non représentée, la paroi axiale avant 69 et/ou la paroi axiale arrière 83 sont inclinées par rapport à un plan orthogonal à l'axe longitudinal X11.

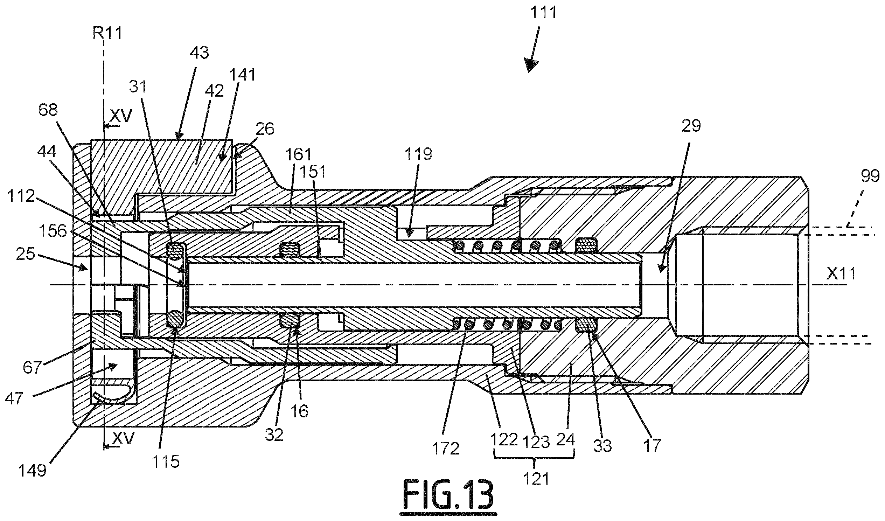

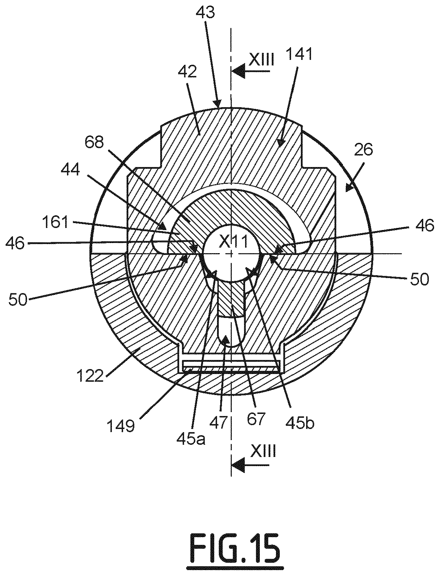

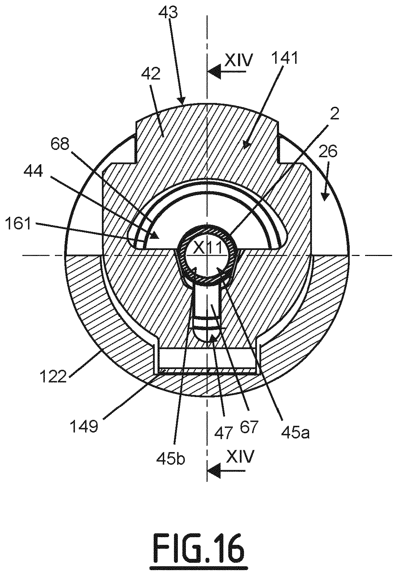

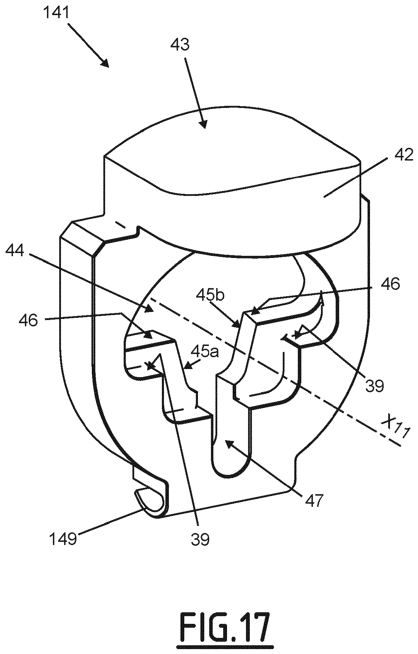

Un deuxième mode de réalisation d'un raccord fluidique 101 est montré sur les figures 13 à 17. Ce raccord fluidique 101 est identique au raccord fluidique 1 montré sur les figures 1 à 12, hormis pour les différences montrées sur les figures et décrites ci-dessous. Le même vocabulaire est utilisé pour les deux modes de réalisation. Les caractéristiques identiques sont identifiées par le même signe de référence, pour les deux modes de réalisation. Pour le deuxième mode de réalisation, les caractéristiques différentes mais assurant la même fonction sont identifiées par un signe de référence dont la valeur est augmentée de 100 par rapport au premier mode de réalisation.

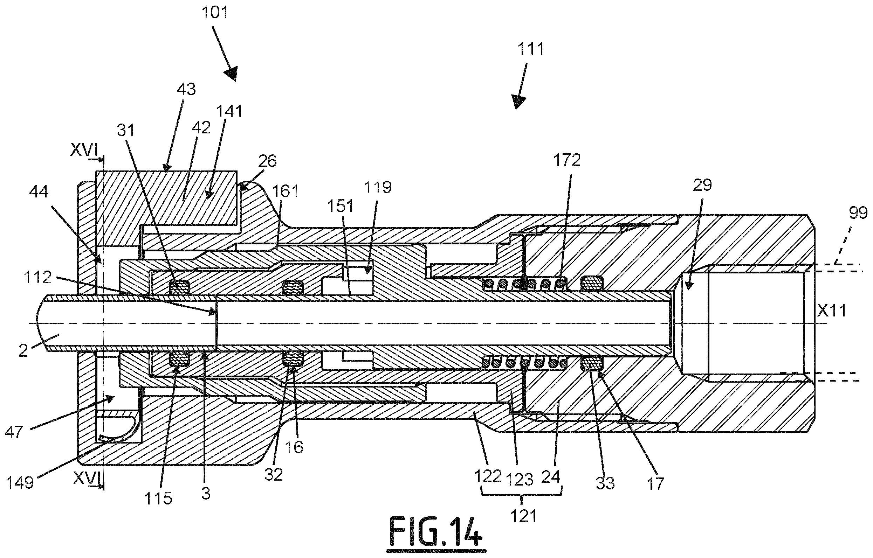

Comme montré sur les figures 13 et 14, dans le raccord fluidique 101, dans l'élément femelle de raccord 111, la bague poussoir 151 est fixement solidaire de la bague mémoire 161. Pour cela, la bague poussoir 151 et la bague mémoire 161 ont été représentées comme formant une pièce d'un seul tenant. En variante, la bague poussoir 151 et la bague mémoire 161 peuvent être fixement solidaires, en formant un ensemble de plusieurs pièces fixement solidaires les unes des autres. Comme montré sur les figures 13 et 14, un seul ressort 172 repousse l'ensemble solidaire comprenant la bague mémoire 161 et bague poussoir 151. La bague mémoire 161 et la bague poussoir 151 sont reliées en traversant radialement le corps intermédiaire 123, au niveau d'un ou plusieurs logements allongés 119, ménagés radialement au travers dudit corps intermédiaire 123. La bague poussoir 151 ne dispose donc pas d'une possibilité de mouvement par rapport à la bague mémoire 161, selon l'axe longitudinal X11. En position avancée de la bague mémoire 161, la bague poussoir 51 est en position avant ; en position reculée de la bague mémoire 161, la bague poussoir 51 est en position arrière.

L'épaulement longitudinal 156 de la bague poussoir 151, qui coopère avec l'élément mâle de raccord 2 et par lequel l'élément mâle de raccord 2 repousse la bague poussoir 151 et la bague mémoire 161, est disposé à l'extrémité avant 112 de la bague poussoir 151.

Dans ce deuxième mode de réalisation, le joint d'étanchéité principal 31 est logé dans un logement principal 115 qui est ménagé dans le corps intermédiaire 123 du corps femelle 121. Dans ce deuxième mode de réalisation, le logement principal 115 du joint d'étanchéité principal 31 est donc fixe par rapport au corps femelle 121. En particulier, la bague poussoir 151 ne joue pas un rôle d'interface entre l'extrémité avant 4 de l'élément mâle de raccord 2 et le joint d'étanchéité principal 31.

Dans ce deuxième mode de réalisation, comme visible sur les figures 13 à 17, le verrou 141 est formé d'un seul tenant avec les moyens élastiques qui repoussent le verrou en position de retenue. Ici, les moyens élastiques sont formés par une portion flexible 149 du verrou 141, ladite portion flexible étant en appui sur le corps avant 122 appartenant au corps femelle 121.

La bague mémoire 161 est solidaire transversalement du corps femelle 121 et mobile selon l'axe longitudinal X11 dans le corps femelle 121 entre une position avancée, dans laquelle la bague mémoire 161 coopère avec le verrou 141 radialement à l'axe longitudinal X11, et maintient ainsi le verrou 141 en position de libération, et une position reculée, dans laquelle la bague mémoire 161 autorise le déplacement du verrou 141 vers sa position de retenue, le poussoir 151 entraînant la bague mémoire 161 vers la position reculée lorsque le poussoir 151 est déplacé par l'élément mâle de raccord 2 de la position avant à la position arrière en cours d'accouplement. Le ressort 172 rappelle la bague mémoire 161 vers sa position avancée.

## Revendications

1. Élément femelle de raccord (11; 111) fluidique, l'élément femelle de raccord (11; 111) étant conçu pour adopter une configuration accouplée (figure 3) et une configuration désaccouplée (figure 1) et comprenant :
- un corps femelle (21; 121), ménageant un canal interne (29) apte à recevoir un élément mâle de raccord (2) en emmanchement selon un axe longitudinal (X11) de l'élément femelle de raccord (11; 111) ;
- un joint d'étanchéité principal (31), apte à coopérer radialement avec l'élément mâle de raccord (2) en configuration accouplée ;
- un verrou (41; 141), percé d'une ouverture (44) conçue pour être traversée par l'élément mâle de raccord (2), le verrou (41; 141) étant monté à coulissement dans un logement de verrou (26) débouchant du corps femelle (21; 121), radialement à l'axe longitudinal (X11), entre une position de retenue, dans laquelle le verrou (41; 141) coopère avec une surface radiale externe (3) de l'élément mâle de raccord (2) et s'oppose au retrait de l'élément mâle de raccord (2) hors du corps femelle (21; 121), et une position de libération, dans laquelle le verrou (41; 141) autorise le mouvement de l'élément mâle de raccord (2) dans le corps femelle (21; 121) ; en configuration accouplée, le verrou (41 ; 141) est en position de retenue ;
- des moyens élastiques (49; 149) rappelant le verrou (41; 141) vers sa position de retenue, et
- un poussoir (51; 151), mobile dans le canal interne (29) du corps femelle (21; 121) selon l'axe longitudinal (X11) entre une position avant et une position arrière,
- une bague mémoire (61; 161), solidaire avec le corps femelle radialement à l'axe longitudinal (X11) et mobile selon l'axe longitudinal (X11) dans le corps femelle (21; 121), entre:
∘ une position avancée, dans laquelle la bague mémoire (61; 161) coopère avec le verrou (41; 141), radialement à l'axe longitudinal (X11), et maintient ainsi le verrou (41; 141) en position de libération, et
∘ une position reculée, dans laquelle la bague mémoire (61; 161) autorise le déplacement du verrou (41; 141) vers sa position de retenue, le poussoir (51; 151) étant apte à entraîner la bague mémoire (61; 161) jusqu'à la position reculée lorsque le poussoir se déplace de la position avant à la position arrière ; et
- un premier ressort (72; 172) qui rappelle la bague mémoire (61; 161) vers sa position avancée,
où, en configuration désaccouplée, la bague mémoire (61 ; 161) est en position avancée.

2. Élément femelle de raccord (11; 111) selon la revendication 1, dans lequel le verrou (41; 141) et la bague mémoire (61; 161) comprennent des surfaces de butée (46, 50) respectives, qui sont orthoradiales par rapport à l'axe longitudinal (X11), et dans lequel la surface de butée (50) de la bague mémoire (61 ; 161) et la surface de butée (46) du verrou (41 ; 141) :
- en position avancée de la bague mémoire (61; 161), sont en contact pour maintenir le verrou (41; 141) en position de libération et
- en position reculée de la bague mémoire (61; 161), sont décalées l'une par rapport à l'autre selon l'axe longitudinal (X11) pour autoriser le déplacement du verrou (41; 141) vers sa position de retenue.

3. Élément femelle de raccord (11; 111) selon la revendication 2, dans lequel la surface de butée (46) du verrou est délimitée par l'ouverture (44) du verrou (41 ; 141).

4. Élément femelle de raccord (11; 111) selon l'une quelconque des revendications 2 ou 3, dans lequel, en position de retenue du verrou (41 ; 141), la surface de butée (50) de la bague mémoire (61; 161) est en vis-à-vis d'une surface de retenue (39) du verrou (41; 141), radialement par rapport à l'axe longitudinal (X11).

5. Élément femelle de raccord (11; 111) selon l'une quelconque des revendications précédentes, dans lequel le verrou (41; 141) comprend deux surfaces de verrouillage (45a, 45b), qui délimitent des portions de l'ouverture (44) et qui sont destinées à coopérer avec l'élément mâle de raccord (2) en position de retenue du verrou (41, 141), les deux surfaces de verrouillage (45a, 45b) sont symétriques par rapport à un plan radial par rapport à l'axe longitudinal (X11) et les deux surfaces de verrouillage (45a, 45b), sont inclinées l'une par rapport à l'autre et convergent à l'opposé du débouché radial du logement de verrou (26) dans un plan de coupe orthogonal à l'axe longitudinal (X11) et traversant les deux surfaces de verrouillage (45a, 45b).

6. Élément femelle de raccord (11; 111) selon la revendication 5, dans lequel, les deux surfaces de verrouillage (45a, 45b) sont inclinées l'une par rapport à l'autre et convergent vers l'arrière de l'élément femelle de raccord (11 ; 111) dans un plan de coupe orthoradial à l'axe longitudinal (X11) et traversant les deux surfaces de verrouillage (45a, 45b).

7. Élément femelle de raccord (11; 111) selon l'une quelconque des revendications précédentes, dans lequel le poussoir (51) dispose d'une possibilité de mouvement par rapport à la bague mémoire (61), selon l'axe longitudinal (X11).

8. Élément femelle de raccord (11; 111) selon l'une quelconque des revendications précédentes, dans lequel :
- la bague mémoire (61 ; 161) et le poussoir (51; 151) sont disposés radialement de part et d'autre du corps femelle (21; 121) ;
- le corps femelle comprend un logement allongé (19), qui est radialement traversant,
- deux joints d'étanchéité (32, 33) disposés de part et d'autre du logement allongé (19), le long de l'axe longitudinal (X11), sont radialement interposés entre le poussoir (51 ; 151) et le corps femelle (21 ; 121), et
- l'élément femelle de raccord (11; 111) comprend au moins un élément de transmission (18), qui est disposé dans le logement allongé (19) et qui est apte à coopérer longitudinalement avec la bague mémoire (61) et avec le poussoir (51), de sorte que le poussoir (51; 151) est apte à entraîner la bague mémoire (61; 161) vers la position reculée, par l'intermédiaire de l'élément de transmission.

9. Élément femelle de raccord (11) selon la revendication 8, dans lequel chaque élément de transmission (18) comprend une bille d'actionnement.

10. Élément femelle de raccord (11) selon l'une quelconque des revendications précédentes, dans lequel le poussoir (51) :
- délimite un lamage avant (55) de réception d'une extrémité avant (4) de l'élément mâle de raccord (2) ;
- en position avant et en configuration désaccouplée de l'élément femelle de raccord (11), est interposé radialement entre le lamage avant (55) et le joint d'étanchéité principal (31); et
- est mobile selon l'axe longitudinal (X11) par rapport au corps femelle (21), à l'encontre d'un deuxième ressort (71) de l'élément femelle de raccord (11), jusqu'à une position dans laquelle le poussoir (51) est longitudinalement décalé par rapport au joint d'étanchéité principal (31).

11. Élément femelle de raccord (11) selon l'une quelconque des revendications précédentes, dans lequel :
- l'élément femelle de raccord (11) comprend un logement principal (15) logeant le joint d'étanchéité principal (31) ;
- le corps femelle (21) comprend un corps intermédiaire (23) autour duquel est montée la bague mémoire (61) ; et
- la bague mémoire (61) forme une paroi axiale avant (69) du logement principal (15).

12. Élément femelle de raccord (11) selon la revendication 11, dans lequel :
- en configuration désaccouplée, le joint d'étanchéité principal (31) est longitudinalement décalé par rapport au corps intermédiaire (23) ; et
- en configuration accouplée, une surface radiale interne de recouvrement (14) du corps intermédiaire (23) est en recouvrement radial du joint d'étanchéité principal (31).

13. Élément femelle de raccord (11; 111) selon l'une des revendications 11 ou 12, dans lequel l'élément femelle de raccord (11) comprend en outre une bague d'ajustement (81) logée dans le corps intermédiaire (23) et formant une paroi axiale arrière (83) du logement principal (15) du joint d'étanchéité principal (31) dans l'élément femelle (11), la bague d'ajustement (81) étant mobile par rapport au corps intermédiaire (23) selon l'axe longitudinal (X11) et étant repoussée par un troisième ressort (73) en direction du joint d'étanchéité principal (31).

14. Élément femelle de raccord (11; 111) selon l'une quelconque des revendications précédentes, dans lequel la bague mémoire (61; 161) comprend une languette d'indexage (67), qui est engagée dans une rainure longitudinale d'indexage (47) du verrou (41; 141), pour lier la bague mémoire (61; 161) et le verrou (41; 141) en rotation autour de l'axe longitudinal (X11).

15. Raccord fluidique (1; 101), comprenant un élément mâle de raccord (2), ainsi que l'élément femelle de raccord (11; 111) selon l'une quelconque des revendications précédentes, l'élément mâle de raccord (2) étant apte à venir longitudinalement en butée contre le poussoir (51; 151) et à repousser le poussoir (51 ; 151) de sa position avant à sa position arrière, le verrou (41; 141) coopérant, en position de retenue, avec la surface radiale externe (3) de l'élément mâle de raccord (2) pour s'opposer au retrait de l'élément mâle de raccord (2) hors du corps femelle (21 ; 121), la surface radiale externe (3) de l'élément mâle de raccord (2) étant de diamètre longitudinalement constant sur toute sa partie longitudinale emmanchée dans l'élément femelle de raccord (11 ; 111) en configuration accouplée.

## Patentansprüche

1. Fluidische Anschlussbuchse (11; 111), wobei die Anschlussbuchse (11; 111) entworfen ist, um eine gekoppelte Konfiguration (Fig. 3) und eine entkoppelte Konfiguration (Fig. 1) anzunehmen, und umfassend:
- einen Buchsenkörper (21; 121), der einen internen Kanal (29) aufnimmt, der ausgelegt ist, um ein Steckanschlusselement (2) durch Einführen gemäß einer Längsachse (X11) der Anschlussbuchse (11; 111) zu empfangen;
- eine Hauptdichtung (31), die ausgelegt ist, um radial mit dem Steckanschlusselement (2) in der gekoppelten Konfiguration zusammenzuarbeiten,
- eine Verriegelung (41; 141), die mit einer Öffnung (44) durchbrochen ist, die entworfen ist, um vom Steckanschlusselement (2) gequert zu werden, wobei die Verriegelung (41; 141) gleitend in einer Verriegelungsaufnahme (26) montiert ist, die vom Buchsenkörper (21; 121) radial zur Längsachse (X11) zwischen einer Rückhalteposition, in der die Verriegelung (41; 141) mit einer äußeren radialen Oberfläche (3) des Steckanschlusselements (2) zusammenarbeitet und sich dem Rückzug des Steckanschlusselements (2) aus dem Buchsenkörper (21; 121) widersetzt, und einer Freigabeposition, in der die Verriegelung (41; 141) die Bewegung des Steckanschlusselements (2) im Buchsenkörper (21; 121) ermöglicht, mündet; in der gekoppelten Konfiguration befindet sich die Verriegelung (41; 141) in der Rückhalteposition;
- elastische Mittel (49; 149), die die Verriegelung (41; 141) hin zu ihrer Rückhalteposition rückstellen, und
- einen Knopf (51; 151), der zwischen einem inneren Kanal (29) des Buchsenkörpers (21; 121) gemäß der Längsachse (X11) zwischen einer vorderen Position und einer hinteren Position beweglich ist,
- einen Speicherring (61; 161), der fest mit dem Buchsenkörper radial zur Längsachse (X11) verbunden und gemäß der Längsachse (X11) im Buchsenkörper (21; 121) beweglich ist, zwischen
- einer vorgeschobenen Position, in der der Speicherring (61; 161) mit der Verriegelung (41; 141) radial zur Längsachse (X11) zusammenarbeitet und somit die Verriegelung (41; 141) in der Freigabeposition hält, und
- einer zurückgezogenen Position, in der der Speicherring (61; 161) die Verschiebung der Verriegelung (41; 141) in ihre Rückhalteposition ermöglicht, wobei der Knopf (51; 151) ausgelegt ist, um den Speicherring (61; 161) bis in eine zurückgezogene Position anzutreiben, wenn sich der Knopf von der vorderen Position in die hintere Position verschiebt; und
- eine erste Feder (72; 172), die den Speicherring (61; 161) hin zu seiner vorgeschobenen Position rückstellt, oder, in der entkoppelten Position, sich der Speicherring (61; 161) in der vorgeschobenen Position befindet.

2. Anschlussbuchse (11; 111) nach Anspruch 1, wobei die Verriegelung (41; 141) und der Speicherring (61; 161) jeweilige Anschlagoberflächen (46, 50) umfassen, die orthoradial mit Bezug auf die Längsachse (X11) sind, und wobei die Anschlagoberfläche (50) des Speicherrings (61; 161) und die Anschlagoberfläche (46) der Verriegelung (41; 141):
- in der vorgeschobenen Position des Speicherrings (61; 161) in Kontakt sind, um die Verriegelung (41; 141) und der Freigabeposition zu halten, und
- in der zurückgezogenen Position des Speicherrings (61; 161) mit Bezug aufeinander gemäß der Längsachse (X11) versetzt sind, um die Verschiebung der Verriegelung (41; 141) in ihre Rückhalteposition zu ermöglichen.

3. Anschlussbuchse (11; 111) nach Anspruch 2, wobei die Anschlagoberfläche (46) der Verriegelung durch die Öffnung (44) der Verriegelung (41; 141) begrenzt ist.

4. Anschlussbuchse (11; 111) nach einem der Ansprüche 2 oder 3, wobei in der Rückhalteposition der Verriegelung (41; 141) sich die Anschlagoberfläche (50) des Speicherrings (61; 161) gegenüber einer Rückhalteoberfläche (39) der Verriegelung (41; 141) radial mit Bezug auf die Längsachse (X11) befindet.

5. Anschlussbuchse (11; 111) nach einem der vorhergehenden Ansprüche, wobei die Verriegelung (41; 141) zwei Verriegelungsoberflächen (45a, 45b) umfasst, die die Abschnitte der Öffnung (44) begrenzen, und die ausgelegt sind, mit dem Steckanschlusselement (2) in der Rückhalteposition der Verriegelung (41; 141) zusammenzuarbeiten, die zwei Verriegelungsoberflächen (45a, 45b) symmetrisch mit Bezug auf eine radiale Ebene mit Bezug auf die Längsachse (X11) sind und die zwei Verriegelungsoberflächen (45a, 45b) mit Bezug aufeinander geneigt sind und gegenüber der radialen Einmündung der Verriegelungsaufnahme (26) in einer Schnittebene orthogonal zur Längsachse (X11) zusammenlaufen und die zwei Verriegelungsoberflächen (45a, 45b) queren.

6. Anschlussbuchse (11; 111) nach Anspruch 5, wobei die zwei Verriegelungsoberflächen (45a, 45b) mit Bezug aufeinander geneigt sind und hin zur Hinterseite der Anschlussbuchse (11; 111) in einer Schnittebene orthoradial zur Längsachse (X11) zusammenlaufen und die zwei Verriegelungsoberflächen (45a, 45b) queren.

7. Anschlussbuchse (11; 111) nach einem der vorhergehenden Ansprüche, wobei der Knopf (51) über eine Bewegungsmöglichkeit mit Bezug auf den Speicherring (61) gemäß der Längsachse (X11) verfügt.

8. Anschlussbuchse (11; 111) nach einem der vorhergehenden Ansprüche, wobei
- der Speicherring (61; 161) und der Knopf (51; 151) radial auf beiden Seiten des Buchsenkörpers (21; 121) angeordnet sind;
- der Buchsenkörper eine längliche Aufnahme (19) umfasst, die radial querend ist,
- zwei Dichtungen (32, 33), angeordnet auf beiden Seiten der länglichen Aufnahme (19), entlang der Längsachse (X11) radial zwischen dem Knopf (51; 151) und den Buchsenkörper (21; 121) gestellt sind, und
- die Anschlussbuchse (11; 111) mindestens ein Übertragungselement (18) umfasst, das in der länglichen Aufnahme (19) angeordnet ist, und das ausgelegt ist, um der Länge nach mit dem Speicherring (61) und mit dem Knopf (51) zusammenzuarbeiten, so dass der Knopf (51, 151) ausgelegt ist, um den Speicherring (61; 161) in die zurückgezogene Position mit Hilfe des Übertragungselements anzutreiben.

9. Anschlussbuchse (11) nach Anspruch 8, wobei jedes Übertragungselement (18) eine Betätigungskugel umfasst.

10. Anschlussbuchse (11; 51) nach einem der vorhergehenden Ansprüche, wobei der Knopf (51):
- eine vordere Senkung (55) zur Aufnahme eines vorderen Endes (4) des Steckanschlusselements (2) begrenzt;
- in der vorderen Position und in der entkoppelten Konfiguration der Anschlussbuchse (11) radial zwischen die vordere Senkung (55) und die Hauptdichtung (31) gestellt ist; und
- beweglich gemäß der Längsachse (X11) mit Bezug auf den Buchsenkörper (21) gegenüber einer zweiten Feder (71) der Anschlussbuchse (11) bis in eine Position ist, in der der Knopf (51) der Länge nach mit Bezug auf die Hauptdichtung (31) versetzt ist.

11. Anschlussbuchse (11) nach einem der vorhergehenden Ansprüche, wobei
- die Anschlussbuchse (11) eine Hauptaufnahme (15) umfasst, die die Hauptdichtung (31) aufnimmt;
- des Buchsenkörper (21) einen Zwischenkörper (23) umfasst, um den der Speicherring (61) montiert ist; und
- der Speicherring (61) eine vordere axiale Wand (69) der Hauptaufnahme (15) bildet.

12. Anschlussbuchse (11) nach Anspruch 11, wobei
- in der entkoppelten Konfiguration die Hauptdichtung (31) der Länge nach mit Bezug auf den Zwischenkörper (23) versetzt ist; und
- in der gekoppelten Konfiguration eine innere radiale Abdeckoberfläche (14) des Zwischenkörpers (23) die Hauptdichtung (31) radial abdeckt.

13. Anschlussbuchse (11; 111) nach einem der Ansprüche 11 oder 12, wobei die Anschlussbuchse (11) außerdem einen Einstellring (81) umfasst, der im Zwischenkörper (23) aufgenommen ist und eine hintere axiale Wand (83) der Hauptaufnahme (15) der Hauptdichtung (31) in der Buchse (11) bildet, wobei der Einstellring (81) beweglich mit Bezug auf den Zwischenkörper (23) gemäß der Längsachse (X11) ist und durch eine dritte Feder (73) in Richtung der Hauptdichtung (31) zurückgedrängt wird.

14. Anschlussbuchse (11; 111) nach einem der vorhergehenden Ansprüche, wobei der Speicherring (61; 161) eine Indexierungslasche (67) umfasst, die in einer längs gerichteten Indexierungsnut (47) der Verriegelung (41; 141) eingegriffen ist, um den Speicherring (61; 161) und die Verriegelung (41; 141) in Rotation um die Längsachse (X11) zu verbinden.

15. Fluidischer Anschluss (1; 101), umfassend ein Steckanschlusselement (2) sowie die Anschlussbuchse (11; 111 ) nach einem der vorhergehenden Ansprüche, wobei das Steckanschlusselement (2) ausgelegt ist, um der Länge nach gegen den Knopf (51; 151) in Anschlag zu kommen und den Knopf (51; 151) aus seiner vorderen Position in seine hintere Position zurückzustoßen, wobei die Verriegelung (41; 141) in der Rückhalteposition mit der externen radialen Oberfläche (3) des Steckanschlusselements (2) zusammenzuarbeitet, um sich dem Rückzug des Steckanschlusselements (2) aus dem Buchsenkörper (21; 121) entgegenzustellen, wobei die externe radiale Oberfläche (3) des Steckanschlusselements (2) einen konstanten längsgerichteten Durchmesser auf seinem gesamten Längsteil aufweist, der auf die Anschlussbuchse (11; 111) in der gekoppelten Konfiguration aufgesteckt ist.

## Claims

1. A female fluid coupling element (11; 111), the female coupling element (11; 111) being designed to adopt a coupled configuration (figure 3) and an uncoupled configuration (figure 1) and comprising:
- a female body (21; 121), arranging an inner channel (29) able to receive a male coupling element (2) by fitting along the longitudinal axis (X11) of the female coupling element (11; 111);
- a main sealing gasket (31), able to cooperate radially with the male coupling element (2) in the coupled configuration;
- a bolt (41; 141), pierced with an opening (44) designed to be passed through by the male coupling element (2), the bolt (41; 141) being mounted sliding in a bolt housing (26) emerging from the female body (21; 121), radially with respect to the longitudinal axis (X11), between a holding position, in which the bolt (41; 141) cooperates with an outer radial surface (3) of the male element (2) and opposes the removal of the male coupling element (2) from the female body (21; 121), and a releasing position, in which the bolt (41; 141) allows the movement of the male coupling element (2) in the female body (21; 121); in the coupled configuration, the bolt (41; 141) is in the holding position;
- resilient means (49; 149) returning the bolt (41; 141) toward its holding position, and
- a plunger (51; 151), movable in the inner channel (29) of the female body (21; 121) along the longitudinal axis (X11) between a forward position and a rear position,
- a memory ring (61; 161), secured to the female body radially with respect to the longitudinal axis (X11) and movable along the longitudinal axis (X11) in the female body (21; 121), between:
∘ an advanced position, in which the memory ring (61; 161) cooperates with the bolt (41; 141), radially with respect to the longitudinal axis (X11), and thus keeps the bolt (41; 141) in the releasing position, and
∘ a withdrawn position, in which the memory ring (61; 161) allows the movement of the bolt (41; 141) toward its holding position, the plunger (51; 151) being able to drive the memory ring (61; 161) to the withdrawn position when the plunger moves from the forward position to the rear position; and
- a first spring (72; 172) that returns the memory ring (61; 161) toward its advanced position,
wherein, in the uncoupled configuration, the memory ring (61; 161) is in the advanced position.

2. The female coupling element (11; 111) according to claim 1, wherein the bolt (41; 141) and the memory ring (61; 161) comprise respective stop surfaces (46, 50), which are orthoradial relative to the longitudinal axis (X11), and wherein the stop surface (50) of the memory ring (61; 161) and the stop surface (46) of the bolt (41; 141):
- in the advanced position of the memory ring (61; 161), are in contact to keep the bolt (41; 141) in the releasing position, and
- in the withdrawn position of the memory ring (61; 161), are offset relative to one another along the longitudinal axis (X11) to allow the movement of the bolt (41; 141) toward its holding position.

3. The female coupling element (11; 111) according to claim 2, wherein the stop surface (46) of the bolt is delimited by the opening (44) of the bolt (41; 141).

4. The female coupling element (11; 111) according to any one of claims 2 or 3, wherein, in the holding position of the bolt (41; 141), the stop surface (50) of the memory ring (61; 161) is opposite a holding surface (39) of the bolt (41; 141), radially relative to the longitudinal axis (X11).

5. The female coupling element (11; 111) according to any one of the preceding claims, wherein the bolt (41; 141) comprises two locking surfaces (45a, 45b), which delimit portions of the opening (44) and which are suitable for cooperating with the male coupling element (2) in the holding position of the bolt (41, 141), the two locking surfaces (45a, 45b) are symmetrical relative to a radial plane with respect to the longitudinal axis (X11) and the two locking surfaces (45a, 45b), are inclined relative to one another and converge opposite the radial mouth of the bolt housing (26) in a section plane orthogonal to the longitudinal axis (X11) and passing through the two locking surfaces (45a, 45b).

6. The female coupling element (11; 111) according to claim 5, wherein, the two locking surfaces (45a, 45b) are inclined relative to one another and converge toward the rear of the female coupling element (11; 111) in a section plane orthoradial to the longitudinal axis (X11) and passing through the two locking surfaces (45a, 45b).

7. The female coupling element (11; 111) according to any one of the preceding claims, wherein the plunger (51) has a possibility of movement relative to the memory ring (61), along the longitudinal axis (X11).

8. The female coupling element (11; 111) according to any one of the preceding claims, wherein:
- the memory ring (61; 161) and the plunger (51; 151) are arranged radially on either side of the female body (21; 121);
- the female body comprises an elongate housing (19), which is a radial through housing,
- two sealing gaskets (32, 33) arranged on either side of the elongate housing (19), along the longitudinal axis (X11), are radially inserted between the plunger (51; 151) and the female body (21; 121), and
- the female coupling element (11; 111) comprises at least one transmission element (18), which is arranged in the elongate housing (19) and that is able to cooperate longitudinally with the memory ring (61) and with the plunger (51), such that the plunger (51; 151) is able to drive the memory ring (61; 161) toward the withdrawn position, by means of the transmission element.

9. The female coupling element (11) according to claim 8, wherein each transmission element (18) comprises an actuating ball.

10. The female coupling element (11) according to any one of the preceding claims, wherein the plunger (51):
- delimits a front spot facing (55) for receiving a front end (4) of the male coupling element (2);
- in the forward position and in the uncoupled configuration of the female coupling element (11), is inserted radially between the front spot facing (55) and the main sealing gasket (31); and
- is movable along the longitudinal axis (X11) relative to the female body (21), against a second spring (71) of the female coupling element (11), up to a position in which the plunger (51) is longitudinally offset relative to the main sealing gasket (31).

11. The female coupling element (11) according to any one of the preceding claims, wherein:
- the female coupling element (11) comprises a main housing (15) housing the main sealing gasket (31);
- the female body (21) comprises an intermediate body (23) around which the memory ring (61) is assembled; and
- the memory ring (61) forms a front axial wall (69) of the main housing (15).

12. The female coupling element (11) according to claim 11, wherein:
- in the uncoupled configuration, the main sealing gasket (31) is longitudinally offset relative to the intermediate body (23); and
- in the coupled configuration, an inner radial covering surface (14) of the intermediate body (23) radially covers the main sealing gasket (31).

13. The female coupling element (11; 111) according to one of claims 11 or 12, wherein the female coupling element (11) further comprises an adjusting ring (81) housed in the intermediate body (23) and forming a rear axial wall (83) of the main housing (15) of the main sealing gasket (31) in the female element (11), the adjusting ring (81) being movable relative to the intermediate body (23) along the longitudinal axis (X11) and being pushed back by a third spring (73) toward the main sealing gasket (31).

14. The female coupling element (11; 111) according to any one of the preceding claims, wherein the memory ring (61; 161) comprises an indexing tongue (67), which is engaged in a longitudinal indexing slot (47) of the bolt (41; 141), to connect the memory ring (61; 161) and the bolt (41; 141) in rotation around the longitudinal axis (X11).

15. A fluid coupling (1; 101), comprising a male coupling element (2), as well as the female coupling element (11; 111) according to any one of the preceding claims, the male coupling element (2) being able to abut longitudinally against the plunger (51; 151) and to push the plunger (51; 151) back from its forward position to its rear position, the bolt (41; 141) cooperating, in the holding position, with the outer radial surface (3) of the male coupling element (2) to oppose the removal of the male coupling element (2) from the female body (21; 121), the outer radial surface (3) of the male coupling element (2) having a longitudinally constant diameter over its entire longitudinal part fitted in the female coupling element (11; 111) in the coupled configuration.
